(19) Europäisches Patentamt
European Patent Office
Office européen des brevets

(11) Veröffentlichungsnummer: **0 318 758 A2**

(12) **EUROPÄISCHE PATENTANMELDUNG**

(21) Anmeldenummer: **88119082.1**

(51) Int. Cl.⁴: **G03G 5/06 , C07D 209/92 , G03G 13/28**

(22) Anmeldetag: **17.11.88**

(30) Priorität: **28.11.87 DE 3740421**

(43) Veröffentlichungstag der Anmeldung: **07.06.89 Patentblatt 89/23**

(84) Benannte Vertragsstaaten: **BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Dust, Matthias, Dr.**
**Teichgasse 7**
**D-6700 Ludwigshafen(DE)**
Erfinder: **Neumann, Peter**
**Poststrasse 28**
**D-6800 Mannheim(DE)**
Erfinder: **Leyrer, Reinhold J., Dr.**
**Menzelstrasse 4**
**D-6700 Ludwigshafen(DE)**

(54) **Mehrschichtiges, elektrophotographisches Aufzeichnungsmaterial.**

(57) Mehrschichtiges, elektrophotographisches Aufzeichnungsmaterial mit
(A) einem elektrisch leitenden Träger und mit
(B) einer oder mehreren Schicht(en) aus
($b_1$) einem oder mehreren Bindemittel(n),
($b_2$) einer oder mehreren Ladungsträger erzeugenden Verbindung(en) oder Sensibilisatoren,
($b_3$) einer oder mehreren Ladungsträger transportierenden Verbindung(en) oder Photoleitern und ggf.
($b_4$) Zusatzstoffen,
worin man als Ladungsträger erzeugende Verbindungen oder Sensibilisatoren ($b_2$) Naphtholactamfarbstoffe der allgemeinen Formel I verwendet,

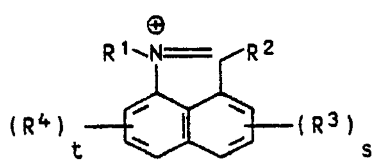

$(X)_n$ I

in welcher die Indices und die Variablen die in den Ansprüchen und in der Beschreibung erläuterte Bedeutung haben, sowie neue Naphtholactamfarbstoffe der allgemeinen Formel I, worin der Rest $R^2$ ein über ein Kohlenstoffringatom mit dem Naphtholactam-Grundgerüst verbundener, substituierter, monocyclischer 1,3-Thiazolylrest ist, die Verwendung dieser neuen Naphtholactame I in elektrophotographischen und laseroptischen Aufzeichnungsmaterialen sowie neue reprographische Verfahren und neue Verfahren für die Herstellung von Offsetdruckplatten und von Photoresists, bei welchen man das neue mehrschichtige, elektrophotographische Aufzeichnungsmaterial verwendet.

EP 0 318 758 A2

# Mehrschichtiges, elektrophotographisches Aufzeichnungsmaterial

Die Erfindung richtet sich auf ein neues, mehrschichtiges, elektrophotographisches Aufzeichnungsmaterial mit

(A) einem elektrisch leitenden Träger und mit

(B) einer oder mehreren Schicht(en) aus

($b_1$) einem oder mehreren Bindemittel(n),

($b_2$) einer oder mehreren Ladungsträger erzeugenden Verbindung(en) oder Sensibilisatoren,

($b_3$) einer oder mehreren Ladungsträger transportierenden Verbindung(en) oder Photoleitern und ggf.

($b_4$) Zusatzstoffen.

Bekanntermaßen kann ein solches Aufzeichnungsmaterial außer dem Träger (A) und der oder den Schicht(en) (B) noch weitere Schichten enthalten, welche der Funktion des Aufzeichnungsmaterials dienlich sind. Außerdem können sowohl in einem bekannten als auch in dem neuen Aufzeichnungsmaterial die Ladungsträger erzeugenden Verbindungen oder Sensibilisatoren ($b_2$) als separate Schicht oder in einer separaten Schicht neben einer Schicht aus Bindemitteln ($b_1$), Ladungsträger transportierenden Verbindungen ($b_3$) und ggf. Zusatzstoffen ($b_4$) vorliegen, wobei dann diese Doppelschicht ihrer Funktion nach insgesamt als Schicht (B) anzusehen ist. Schichten (B) dieser Art werden daher ebenso wie diejenigen, welche alle Komponenten ($b_1$), ($b_2$), ($b_3$) und ggf. ($b_4$) zusammen enthalten, im folgenden ihrer Funktion gemäß kurz als "photoleitende Schicht (B)" bezeichnet.

Elektrophotographische Aufzeichnungsmaterialien, welche einen elektrisch leitenden Träger (A) und photoleitende Schichten (B) aufweisen, sind beispielsweise aus der EP-A-0 131 215, der EP-B-0 031 481, der EP-A-0 150 419, der EP-A-0 162 216, der EP-A-0 156 308, der EP-A-0 131 292, der EP-A-0 152 889 oder der EP-A-0 198 488 bekannt. Diese Aufzeichnungsmaterialien dienen der Herstellung von elektrophotographischen Offsetdruckplatten oder gedruckten Schaltungen (Leiterplatten) oder sie werden für die Photokopiertechnik verwendet.

Hierzu wird die photoleitende Schicht (B) eines Aufzeichnungsmaterials z.B. mittels einer Coronaentladung elektrisch positiv oder negativ aufgeladen. Hiernach wird die elektrisch aufgeladene Schicht (B) mit aktinischem Licht bildmäßig belichtet, wobei je nach verwendetem Sensibilisator ($b_2$) ultraviolettes, sichtbares oder infrarotes Licht in Betracht kommt. Durch die Belichtung wird die photoleitende Schicht (B) in ihren belichteten Bereichen elektrisch leitend, so daß die zuvor erzeugte elektrostatische Aufladung in diesen Bereichen über den elektrisch leitenden Träger (A) abfließen kann. Hierdurch wird ein latentes elektrostatisches Bild auf dem Aufzeichnungsmaterial erzeugt, welches mit Hilfe geeigneter flüssiger oder fester Toner zu einem sichtbaren Bild entwickelt werden kann. Diese Technik der bildmäßigen Informationsaufzeichnung wird allgemein als Xerographie bezeichnet, wobei der dem Aufzeichnungsverfahren zugrundeliegende physikalische Prozeß auch unter dem Namen "Carlson-Prozeß" bekannt ist.

Nach dem Tonen des elektrostatischen Bildes kann ein solcher Aufzeichnungsmaterial in unterschiedlicher Weise weiterverarbeitet werden. Beispielsweise kann das Tonerbild von dem Aufzeichnungsmaterial auf einen anderen Träger, wie etwa Papier, übertragen und dort fixiert werden, wodurch man eine positive Photokopie der ursprünglichen Bildvorlage erhält. Dieser Vorgang kann je nach Lebensdauer des Aufzeichnungsmaterials mehr oder weniger oft durchgeführt werden. Für die Herstellung elektrophotographischer Offesetdruckplatten wird dagegen das Tonerbild auf der photoleitenden Schicht (B) selbst durch Erhitzen fixiert. Hiernach werden die unbelichteten und daher tonerfreien Bereiche der photoleitenden Schicht (B) mit Hilfe geeigneter flüssiger Medien, welche man auch als Entwicklungsmittel bezeichnet, weggelöst. Eine so hergestellte elektrophotographische Offsetdruckplatte nimmt, ebenso wie eine in konventioneller Weise erzeugte, im allgemeinen an ihren hydrophoben Tonerbildbereichen ölige Druckfarbe und an ihren entschichteten, hydrophilen Bereichen Wasser an, so daß sie für offset-typische Druckverfahren geeignet ist. Für die Herstellung elektrophotographischer Photoresists wendet man Verfahren an, die dem Herstellverfahren der Offsetdruckplatten entsprechen.

Wesentliche Parameter, welche bekanntermaßen die Wiedergabequalität solcher Aufzeichnungsmaterialien und ihrer photoleitenden Schichten (B) in der Hauptsache bestimmen, sind eine möglichst niedrige Dunkelleitfähigkeit, eine hohe elektrostatische Aufladbarkeit und eine hohe Empfindlichkeit gegenüber aktinischem Licht, verbunden mit guten elektrokinetischen Eigenschaften, worunter man im allgemeinen einen sehr raschen Spannungsabfall bei der Belichtung auf oder fast auf das ursprüngliche elektrostatische

Potential vor Aufladung versteht. Dieser Spannungsabfall wird auch als photoinduzierter Spannungsabfall oder kurz als Photoabfall bezeichnet. All diese Parameter zusammen legen von vornherein fest, ob ein Aufzeichnungsmaterial kontrastreiche, auch in den feinsten Bildelementen vorlagengetreue Tonerbilden in kürzest möglicher Zeit liefert.

Bei der gegenseitigen Abstimmung der wesentlichen Parameter aufeinander und auf die für die bildmäßige Belichtung der photoleitenden Schicht (B) verwendete Quelle des aktinischen Lichts spielen die Ladungsträger erzeugenden Verbindungen oder Sensibilisatoren ($b_2$) eine ganz entscheidende Rolle. Die von jeher schon große Bedeutung der Sensibilisatoren ($b_2$) ist wegen der Weiterentwicklung herkömmlicher Belichtungsquellen und der Neuentwicklung von Laserlichtquellen noch erhöht worden. Die Fortschritte auf diesem Gebiet haben inzwischen zu Belichtungsgeräten geführt, welche die rasche und exakte bildmäßige Belichtung elektrophotographischer Aufzeichnungsmaterialien mit Hilfe computergesteuerter Laser ermöglicht. Hierfür werden aus Gründen der Wirtschaftlichkeit und der einfachen Herstellweise oftmals Halbleiterlaser wie etwa GaAlAs-Halbleiterlaser verwendet, welche Infrarotlicht emittieren, oder AlGaInP-Halbleiterlaser, welche sichtbares Licht aussenden. Damit die Vorteile dieser zukunftsträchtigen Belichtungsmethode in vollem Umfang ausgeschöpft werden können, ist allerdings bei den elektrophotographischen Aufzeichnungsmaterialien ein Eigenschaftsprofil vorauszusetzen, das die herkömmlichen Aufzeichnungsmaterialien gar nicht oder nicht in der notwendigen Ausprägung bieten. Insbesondere muß - wegen der kurzen Laserpulse und der vergleichsweise niedrigen Photonenenergie im Rot- und im Infrarotbereich - die Absorption der Lichtenergie durch die photoleitende Schicht (B) und der hierdurch hervorgerufene Photoabfall besonders rasch, d.h. im Nanosekundenbereich, erfolgen, wobei auch in diesem Zeitintervall das Gesetz

$I \cdot t = \text{konstant}$
($I$ = Lichtintensität; $t$ = Zeit)

Gültigkeit haben muß.

Diese strengen Anforderungen werden indes durch die bekannten elektrophotographischen Aufzeichnungsmaterialien, welche als Sensibilisatoren einen oder mehrere Farbstoffe aus den Klassen der Triarylmethane, Xanthene, Cyanine, Azofarbstoffe, Phthalocyanine, Isoindoline oder der Perylentetracarbonsäurederivate enthalten, bislang nicht oder nicht in dem gewünschten Umfang erfüllt. Demzufolge müssen die bekannten Aufzeichnungsmaterialien häufig in der herkömmlichen Art und Weise belichtet werden, um eine gute Wiedergabequalität zu erzielen, wobei man sich indes der besonderen Vorteile der Laserbelichtungsmethode, insbesondere derjenigen mit Halbleiterlasern begibt. Demnach eignen sich die bekannten Aufzeichnungsmaterialien nicht oder nur in sehr eingeschränktem Umfang für die Herstellung wirtschaftlicher, langlebiger, schnell ansprechender und mit Laserbelichtung arbeitender Photokopiergeräte sowie für die Herstellung hochwertiger, vorlagengetreuer und auflagestabiler elektrophotographischer Offsetdruckplatten und hochwertiger vorlagengetreuer und ätzmittelstabiler elektrophotographischer Photoresists nach der Laserbelichtungsmethode. Diese Nachteile schlagen selbstverständlich in vollem Umfang auf die Produkte durch, welche man letztlich mit Hilfe der Laserbelichtung aus den elektrophotographischen Aufzeichnungsmaterialien erzeugen will: So sind die betreffenden Photokopien oder die Druckerzeugnisse nicht nur in lediglich minderer Qualität, sondern auch nur in vergleichsweise geringer Auflage erhältlich, und elektrische Schaltkreise, welche man unter Verwendung der bekannten elektrophotographischen Resists hergestellt hat, weisen oftmals soviele Wiedergabefehler auf, daß sie den Anforderungen der Praxis nicht mehr genügen.

Aufgabe der vorliegenden Erfindung ist es, neue Farbstoffe und neue, mehrschichtige, elektrophotographische Aufzeichnungsmaterialien zu finden, welche die Nachteile der bekannten Farbstoffe und Aufzeichnungsmaterialien nicht mehr länger aufweisen. Vor allem sollen die neuen Aufzeichnungsmaterialien nicht nur bei der bildmäßigen Belichtung mit ultraviolettem oder sichtbarem Licht ein vorzügliches reprographisches Eigenschaftsprofil aufweisen, sondern sie sollen auch der bildmäßigen Belichtung mit rotem oder infrarotem Licht, insbesondere mit rotem oder infrarotem Laserlicht, zugänglich sein und hiernach hervorragende Photokopien, elektrophotographische Offsetdruckplatten und elektrophotographische Photoresists liefern.

Demgemäß wurde ein mehrschichtiges, elektrophotographisches Aufzeichnungsmaterial mit

(A) einem elektrisch leitenden Träger und mit

(B) einer oder mehreren Schicht(en) aus

($b_1$) einem oder mehreren Bindemittel(n),

($b_2$) einer oder mehreren Ladungsträger erzeugenden Verbindung(en) oder Sensibilisatoren,

($b_3$) einer oder mehreren Ladungsträger transportierenden Verbindung(en) oder Photoleitern und ggf.

(b₄) Zusatzstoffen

gefunden, wobei das neue Aufzeichnungsmaterial dadurch gekennzeichnet ist, daß man hierin als Ladungsträger erzeugende Verbindungen oder Sensibilisatoren ($b_2$) Naphtholactamfarbstoffe der allgemeinen Formel I verwendet,

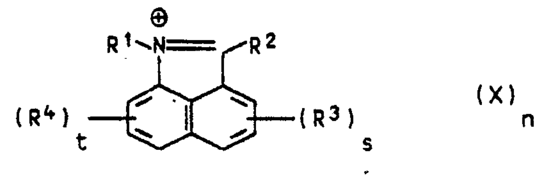

I

worin die Indices und die Variablen die folgende Bedeutung haben:

$R^1$ $C_1$- bis $C_{22}$-Alkyl, $C_5$- bis $C_7$-Cycloalkyl, ω-Aryl-$C_1$- bis ω-Aryl-$C_6$-Alkyl, Aryl und $C_3$- bis $C_{15}$-Alkylen;

$R^1$ mit Halogenatomen, mit Hydroxy-, Amino-, Thiolo-, Cyan- und/oder Oxogruppen, mit Alkyl-, Cycloalkyl-, Aryl- und/oder Arylalkyloxiresten, mit Alkyl-, Cycloalkyl-, Aryl- und/oder Arylalkylaminoresten, mit Alkan-, Cycloalkan-, Arylalkan- und/oder Aromatcarbonyloxiresten, mit Alkan-, Cycloalkan-, Arylalkan- und/oder Aromatcarbonylaminoresten, mit Alkyliden-, Cycloalkyliden- und/oder Arylalkylideniminoresten und/oder mit Carbon-, Phosphon- und/oder Sulfonsäuregruppen substituiertes $C_1$- bis $C_{22}$-Alkyl, $C_5$- bis $C_7$-Cycloalkyl, ω-Aryl-$C_1$-bis ω-Aryl-$C_6$-Alkyl, Aryl und $C_3$- bis $C_{15}$-Alkylen;

$R^1$ Rest der allgemeinen Formel II,

$R^5 \{O\text{-}(CH_2)_m\}_p$ II

worin $R^5$ ein Wasserstoffatom, $C_1$- bis $C_6$-Alkyl und $C_6$- bis $C_{10}$-Aryl bezeichnet und m gleich einer ganzen Zahl von 2 bis 4 und unabhängig hiervon p gleich einer ganzen Zahl von 1 bis 10 ist;

$R^2$ Rest der allgemeinen Formel III,

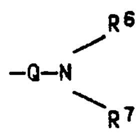

III

worin $R^6$ und $R^7$ voneinander verschieden oder gleich sind und Wasserstoffatome, Reste $R^1$ oder Alkan-1-yl-ω-carbonsäurealkylester bezeichnen und worin Q einen 1,4-phenylen-, einen 2-Alkyl-1,4-phenylen- oder einen 1,4-Naphthylenrest bezeichnet; $R^2$ Rest der allgemeinen Formel IV,

$-Q-R^8$ IV

worin $R^8$ einen über ein Stickstoffringatom mit Q verbundenen, substituierten oder unsubstituierten, monocyclischen oder anellierten Heterocyclus aus der Klasse der Azole, der Azoline, der Azolidine, der partiell oder vollständig hydrierten Azole und der partiell oder vollständig hydrierten Azepine bezeichnet und worin Q die bei der allgemeinen Formel III angegebene Bedeutung hat;

$R^2$ ein über ein Kohlenstoffringatom mit dem Naphtholactam-Grundgerüst verbundener, substituierter oder unsubstituierter, monocyclischer oder anellierter Heterocyclus aus der Klasse der Azole, der Azoline, der partiell hydrierten Azine und der Azine; und

$R^2$ Rest der allgemeinen Formel V,

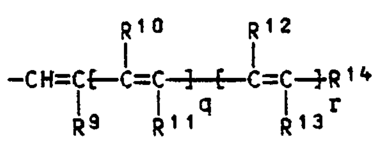

V

worin die Indices und die Variablen die folgende Bedeutung haben:

q 0 oder 1;

r unabhängig von q 0,1 oder 2;

$R^9$ und $R^{11}$ jeweils ein Wasserstoffatom oder für den Fall, daß q für 1 steht, zusammen eine unsubstituierte oder eine durch $C_1$- bis $C_4$-Alkyl substituierte $C_2$- bis $C_3$-Alkandiylkette oder eine oder zwei Carbonylgruppe(n);

$R^{10}$, $R^{12}$ und $R^{13}$ Wasserstoffatom, Halogenatom, Cyan, Nitro, Hydroxy, Rest $R^1$, $C_1$- bis $C_6$-Alkoxi, $C_5$- bis $C_7$-Cycloalkoxi, $C_6$- bis $C_{10}$-Aryloxi, ω-Phenyl-$C_1$- bis ω-Phenyl-$C_6$-alkyloxi, $C_1$- bis $C_6$-Alkoxi-, $C_5$- bis $C_7$-Cycloalkoxi-, $C_6$- bis- $C_{10}$-Aryloxi- und ω-Phenyl-$C_1$- bis ω-Phenyl-$C_6$-alkoxicarbonyl, $C_1$- bis $C_6$-Alkylamino-, $C_5$- bis $C_7$-Cycloalkylamino-, $C_6$- bis $C_{10}$-Arylamino- und ω-Phenyl-$C_1$-bis ω-Phenyl-$C_6$-alkylaminocarbonyl und substituierter oder unsubstituierter monocyclischer oder anellierter Heterocyclus aus der Klasse der Azole, der Thiole, der Azoline, der Azine und der partiell oder vollständig hydrierten Azine, wobei $R^{10}$, $R^{12}$ und $R^{13}$ voneinander verschieden oder gleich sind;

$R^{14}$ Rest $R^2$ der allgemeinen Formel III;

$R^{14}$ Rest $R^2$ der allgemeinen Formel IV;

$R^{14}$ ein über ein Kohlenstoffringatom mit dem Rest der allgemeinen Formel V verbundener, substituierter oder unsubstituierter, monocyclischer oder anellierter Heterocyclus aus der Klasse der Azole, der Thiole, der Azoline, der Azolidine, der Azine der partiell oder vollständig hydrierten Azine und der Thiine; und

$R^{14}$ Rest der allgemeinen Formel VI,

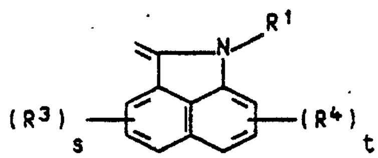

VI

worin $R^1$ die vorstehend angegebene Bedeutung hat und worin $R^3$, $R^4$, s und t die nachstehend angegebene Bedeutung haben;

$R^2$ Rest der allgemeinen Formel VII,

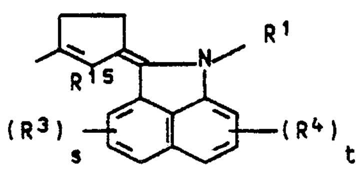

VII,

worin $R^1$ die vorstehend angegebene Bedeutung hat, $R^3$, $R^4$, s und t die nachstehend angegebene Bedeutung haben und worin $R^{15}$ den Rest einer CH-aciden Verbindung bezeichnet;

s 1, 2 oder 3;

t unabhängig von s 1, 2 oder 3;

$R^3$ und $R^4$ Rest $R^{10}$, $R^{12}$ und $R^{13}$, Rest $R^1$, Carbon, Sulfon- und Phosphonsäuregruppe, $C_1$-bis $C_6$-Alkyl-, $C_5$- bis $C_{10}$-Cycloalkyl-, $C_6$- bis $C_{10}$- Aryl- und ω-Phenyl-$C_1$- bis ω-Phenyl-$C_6$-alkylthio, -oxisulfonyl, -sulfonyl und -oxicarbonylaminyl, N,N-Dialkyl-, N,N-Diaryl-, N-Alkyl-N-aryl-, N,N-Di-(ω-arylalkyl)-, N-Alkyl-N-(ω-arylalkyl)-, N-Aryl-N-(ω-arylalkyl)-, N,N-Dicycloalkyl-, N-Cycloalkyl-N-alkyl-, N-Cycloalkyl-N-aryl- und N-Cycloalkyl-N-(ω-arylalkyl)amino, -aminosulfonyl und -aminocarbonyl sowie für die Fälle, daß

s = 2 oder 3,

t = 2 oder 3 oder

s und t = 1, 2 oder 3

ein Kohlenstoff-, Stickstoff-, Sauerstoff- und Schwefelatom, welches Bestandteil des Gerüsts von einem oder von mehreren an die Naphth-1,8-ylen-Gruppe anellierten Ringen ist,

wobei $R^3$ und $R^4$ voneinander verschieden oder gleich sind;

X Anion;

und

n 0 oder 1/3, 1/2, 2/3, 1, 2 oder 3.

Außerdem wurden neue Naphtholactamfarbstoffe der allgemeinen Formel I gefunden, worin die Variablen $R^1$, $R^3$, $R^4$ und X sowie die Indices t, s und n die vorstehend angegebene Bedeutung haben und worin der Rest $R^2$ ein über ein Kohlenstoffringatom mit dem Naphtholactam-Grundgerüst verbundener, substituierter monocyclischer 1,3-Thiazolylrest ist.

Wesentlicher Bestandteil des erfindungsgemäßen, mehrschichtigen, elektrophotographischen Aufzeichnungsmaterials ist die neue photoleitende Schicht (B).

Die neue photoleitende Schicht (B) enthält ein oder mehrere Bindemittel ($b_1$), eine oder mehrere Ladungsträger erzeugende Verbindung(en) oder Sensibilisatoren ($b_2$) und eine oder mehrere Ladungsträger transportierende Verbindung(en) oder Photoleiter ($b_3$) gemeinsam nebeneinander.

Oder die neue photoleitende Schicht (B) enthält den oder die Sensibilisator(en) in einer separat vorliegender Schicht oder als eine separat vorliegende Schicht, so daß die neue photoleitende Schicht (B) eine Doppelschicht darstellt.

Welche neue photoleitende Schicht (B) man für den Aufbau der erfindungsgemäßen Aufzeichnungsmaterialien auswählt, richtet sich in erster Linie nach dem Verwendungszweck der Aufzeichnungsmaterialien.

Der erfindungswesentliche Bestandteil der neuen photoleitenden Schicht (B) ist der Sensibilisator ($b_2$). Hierbei handelt es sich um einen Naphtholactamfarbstoff der allgemeinen Formel I, worin die Indices und die Variablen die im Anspruch angegebene Bedeutung haben.

Beispiele geeigneter Reste $R^1$ in der allgemeinen Formel I sind Methyl, Ethyl, Propyl, Butyl, Pentyl, iso-Propyl, iso-Butyl, sec.-Butyl, tert.-Butyl, Hexyl, Heptyl, Octyl, Nonadecyl, Eicosanyl, Heneicosanyl, Docosanyl, Cyclopentyl, Cyclohexyl, 2-, 3- und 4-Methylcyclohexyl, Cyclopentyl, 2,3-, 2,4-, 2,5- und 3,4-Dimethylcyclopentyl, Phenylmethyl, 2-Phenyl-eth-1-yl, 2-(1′-Naphthyl)-eth-1-yl, 3-Phenyl-prop-1-yl, 3-(4′-Methylphen-1′-yl)-prop-1-yl, 4-Phenyl-but-1-yl, 5-Phenyl-pent-1-yl, 6-Phenyl-hex-1-yl, Phenyl, 4-Methylphen-1-yl, Naphthalin-1-yl, Anthracen-1-yl, Phenanthren-1-yl, Prop-2-en-1-yl, But-3-en-1-yl, Pent-4-en-1-yl, Hex-5-en-1-yl, Hept-6-en-1-yl, Oct-7-en-1-yl, Non-8-en-1-yl, Dec-9-en-1-yl, Undec-10-en-1-yl, Dodec-11-en-1-yl, Pentadec-14-en-1-yl, Trifluormethyl, 2,2,2-Trifluoreth-1-yl, Perfluorprop-1-yl, 2-Chloreth-1-yl, 3-Chlorbut-1-yl, 4-Chlorcyclohex-1-yl, 2- und 4-Chlorphen-1-yl, 4-Trifluormethylphen-1-yl, 2,4-Dichlorphen-1-yl, 4′-Chlorphenylmethyl, 2-(4′-Chlorphen-1′-yl)-eth-1-yl, 4-Chlor-hex-5-en-1-yl, 2-Hydroxyeth-1-yl, 2-Hydroxyprop-1-yl, 3-Hydroxyprop-1-yl, 2-Hydroxybut-1-yl, 2,3-Dihydroxy-prop-1-yl, 8-Hydroxyoct-1-yl, 9-Hydroxydec-1-yl, 2-Hydroxycyclopent-1-yl, 4-Hydroxycyclohex-1-yl, 4′-Hydroxyphenylmethyl, 2-(4′-Hydroxyphen-1′-yl)-eth-1-yl, 3-(4′-Hydroxyphen-1′-yl)-eth-1-yl, 4-Hydroxyphen-1-yl, 2,4-Dihydroxyphen-1-yl, 4-Hydroxy-naphth-1-yl, 3-Hydroxypent-5-en-1-yl, 2-Aminoeth-1-yl, 3-Aminoprop-1-yl, 4-Aminobut-1-yl, 5-Aminopent-1-yl, 6-Aminohex-1-yl, 2-Aminocyclopent-1-yl, 4-Aminocyclohex-1-yl, 4-Aminophenylmethyl, 2-(4′-Aminophen-1′-yl)-eth-1-yl, 3-(4′-Aminophen-1′-yl)-prop-1-yl, 2-Aminophenyl, 4-Aminophenyl, 3-Aminohex-5-en-1-yl, 4-Thiolobut-1-yl, 4-Thiolocyclohex-1-yl, 2-(4′-Thiolophen-1′-yl)-eth-1-yl, 4-Thiolophen--1-yl, 5-Thiolodec-9-en-1-yl, Cyanmethyl, 2-Cyaneth-1-yl, 3-Cyanprop-1-yl, 4-Cyanbut-1-yl, 5-Cyanpont-1-yl, 6-Cyanhex-1-yl, 11-Cyanundec-1-yl, 12-Cyandodec-1-yl, 13-Cyantridec-1-yl, 17-Cyanheptadec-1-yl, 18-Cyanoctadec-1-yl, 4-Cyancyclohex-1-yl, 4-Cyanphenylmethyl, 2-(4′-cyanphen-1′-yl)-eth-1-yl, 3-(4′-Cyanphen-1′-yl)-prop-1-yl, 4-Cyanphen-1-yl, 4-Chlor-2-cyan-phen-1-yl, 2,4-Dicyanphen-1-yl, 3,3-Dicyanprop-2-en-1-yl, 1-Oxo-eth-1-yl, 1-Oxoprop-1-yl, 2-Oxo-prop-1-yl, 2-Oxo-eth-1-yl, 3-Oxo-but-1-yl, 7-Oxo-dec-1-yl, 4,6-Dimethyl-3,5-dioxo-hex-1-yl, 2-Oxo-3-(4′-hydroxyphen-1′-yl)-prop-1-yl, 2-Oxo-3-(4′-trifluorphen-1′-yl)-prop-1-yl, 2-Methoxieth-1-yl, Ethoximethyl, 2-Methoxiprop-1-yl, 4-Methoxibut-1-yl, 6-Methoxihex-1-yl, 7-Ethoxihept-1-yl, 2,4,7-Trimethoxidec-1-yl, 6-Ethyl-4-oxadec-1-yl, 20-Ethoxieicosan-1-yl, 2-Butoxieth-1-yl, 2-Benzyloxi-eth-1-yl, 3-Methoxicyclopentyl, 3,4-Dimethoxicyclopentyl, 4-Methoxicyclohexyl, Cyclohexyloximethyl, 2-Phenyloxi-eth-1-yl, 3-Phenyloxi-prop-1-yl, 10-Phenyloxi-dec-1-yl, (4′-Methoxi-phen-1′-yl)-methyl, 2-(4′-Methoxi-phen-1′-yl)-eth-1-yl, 3-(3′,4′,4′-Trimethoxiphen-1′-yl)-prop-1-yl, 2-[4′-(Phenyloxi)-phen-1′-yl]-eth-1-yl, 2- und 4-Methoxiphen-1-yl, 4-Ethoxiphen-1-yl, 2,4-Dimethoxi-phen-1-yl, 4-Nonyloxi-phen-1-yl, 4-Undecyloxi-phen-1-yl, 4-Dodecyloxi-phen-1-yl, 4-Hexadecyloxi-phen-1-yl, 4-Octadecyloxi-phen1-yl, 3-Octadecyloxi-phen-1-yl, 4-Eicosanyloxiphen-1-yl, 2,3,6,7-Tetramethoxinaphth-1-yl, 4-(4′-Methylphenyloxi)-phen-1-yl, 4-[4′-(4″-Phenyloxi)phen-1′-yl]-phen-1-yl, N,N-Dimethylaminomethyl, 3-Azapent-1-yl, 5-Amino-3-azapent-1-yl, 5-N,N-Dihexylamino-3-azapent-1-yl, 7-Azapentacosan-1-yl, 3,6-Diazaoct-1-yl, 4-N,N-Dioctylamino-but-1-yl, 6-N,N-Dioctadecylamino-hex-1-yl, 18-N,N-Dimethylamino-octadec-1-yl, 2-N-Phenylaminoeth-1-yl, 3-(4′-N,N-Dimethylaminophenylamino)-prop-1-yl, 4-N,N-Dimethylaminocyclohex-1-yl, 6-N-Benzylaminohex-1-yl, 4-N,N-Dimethylaminophen-1-yl, 4-N-Methyl-N-octadecylamino-phen-1-yl, 4-N-Phenylaminophen-1-yl, 4-N-Benzylaminophen-1-yl, 3-N,N-Dimethylaminohex-5-en-1-yl, Methancarbonyloximethyl, 2-(Methancarbonyloxi)-eth-1-yl, 2-(Ethancarbonyloxi)-eth-1-yl, 2-(Propancarbonyloxi)-eth-1-yl, 3-(Butancarbonbyloxi)-prop-1-yl, 6-(Cyclohexancarbonyloxi)-hex-1-yl, 4-(Methancarbonyloxi)-cyclohex-1-yl, 12-(Benzolcarbonyloxi)-dec-1-yl, 4-(Benzolcarbonyloxi)-benzyl, 2-[4′-(Methancarbonyloxi)-phen-1′-yl]-eth-1-yl, 3-[4′-(Propancarbonyloxi)-phen-1′-yl]-prop-1-yl, 4-(Methancarbonyloxi)-phen-1-yl, 4-(Ethancarbonyloxi)-naphth-1-yl, 4-(Heptadecancarbonyloxi)-phen-1-yl, 4-(Cyclohexancarbonyloxi)-phen-1-yl, 5-(Methancarbonyl-oxi)-oct-7-en-1-yl, Methancarbonylaminomethyl, 2-(Methancarbonylamino)-eth-1-yl, 3-(Butancarbonylamino)-prop-1-yl, 8-(Cyclohexancarbonylamino)-oct-1-yl, 2-(Benzolcarbonylamino)-eth-1-yl, 4-(Phenylmethancarbonylamino)-cyclohex-1-yl, 2-[4′-(Methancarbonylamino)-phen-1′-yl]-eth-1-yl, 4-(Methancarbonylamino)-phen-1-yl, 4-(Benzolcarbonylamino)-phen-1-yl, 4-(Heptadecancarbonylamino)-phen-1-yl, 4-Azahex-4-en-1-yl, 2-(Cyclohexylidenimino)-eth-1-yl, 2-(Benzylidenimino)-eth-1-yl, 4-(Cyclohexylidenimino)-cyclohex-1-yl, 4-(Benzylidenimino)-phen-1-yl, 2-[4′-(Benzylidenimino)-phen-1′-yl]-eth-1-yl, 2-Carboxy-eth-1-yl, 3-Carboxy-prop-1-yl, 4-Carboxy-hex-1-yl, 17-Carboxy-hepta-dec-1-yl, 5,6-Dicarboxy-hex-1-yl, 2-Carboxy-cyclopent-1-yl, 4-Carboxy-cyclohex-1-yl, 2-(4′-Carboxy-phen-1′-yl)-eth-1-yl, 3-(3′-Hydroxy-4′-carboxy-phen-1′-yl)-prop-1-yl, 4-Carboxy-phen-1-yl, 3,4-Dicarboxy-phen-1-yl, 6,7-Dicarboxy-naphth-1-yl, 4-Carboxy-hex-5-en-1-yl, Eth-1-yl-2-sulfonsäure, Prop-1-yl-3-sulfonsäure, But-1-yl-4-sulfonsäure, Dodec-1-yl-12-sulfonsäure, Tetradec-1-yl-14-sulfonsäure, Hexadec-1-yl-16-sulfonsäure, Octadec-1-yl-13-sulfsonsäure, Cyclohex-1-yl-4-sulfonsäure, 8-(Phen-1′-yl-4′-sulfonsäure)-oct-1-yl, Phen-1-yl-4-sulfonsäure, Phen-1-yl-3,4-disulfonsäure, Naphth-1-yl-2-sulfonsäure, Naphth-1-yl-2,6-disulfonsäure, Naphth-1-yl-6,7-disulfonsäure, But-3-en-1-yl-2-sulfonsäure, Eth-1-yl-2-phosphonsäure, Cyclohex-1-yl-4-phosphonsäure, Phen-1-yl-4-phosphonsäure, 3-Oxa-5-hydroxypent-1-yl, 3,6-Dioxa-hept-1-yl, 3,6-Dioxa-oct-1-yl, 3,6-Dioxa-dec-1-yl, 3,6-Dioxa-dodec-1-yl, 3,6-Dioxa-6-phenyl-hex-1-yl, 3,6-Dioxa-7-phenyl-hept-1-yl, 3,6,9-Trioxa-dec-1-yl, 3,6,9-Trioxa-undec-1-yl, 3,6,9-Trioxa-tridec-1-yl, 3,6,9-Trioxa-10-phenyl-dec-1-yl, 8-Hydroxi-3,6-dioxa-oct-1-yl, 8-(Phenyloxi)-3,6-dioxa-oct-1-yl, 3,6,9,12,15-Pentaoxa-hexadec-1-yl, 4,8-Dioxa-undec-1-yl, 4-Oxa-8-hydroxy-oct-1-yl, 4,8,12-Trioxa-tridec-1-yl, 4,8,12-Trioxa-octadec-1-yl oder 4,8,12,16-Tetraoxa-heptadec-1-yl.

Beispiele für besonders vorteilhafte Reste $R^1$ in Naphtholactamfarbstoffe der allgemeinen Formel I sind Methyl, Ethyl, Hexyl, Dodecyl, Docosanyl, Phenylmethyl, 2-Butoxi-eth-1-yl (= 3-Oxahept-1-yl), 3,6-Dioxa-hept-1-yl, 3,6-Dioxa-oct-1-yl, 3,6-Dioxa-dec-1-yl, 3,6-Dioxa-dodec-1-yl, 3,6,9-Trioxa-dec-1-yl, 3,6,9-Trioxa-tridec-1-yl oder Undec-10-en-1-yl.

Beispiele geeigneter Reste $R^6$ und $R^7$ in Resten $R^2$ der allgemeinen Formel III sind die vorstehend genannten Reste $R^1$, von denen Methyl, Ethyl, Propyl, Butyl, Pentyl, Hexyl, iso-Propyl, iso-Butyl, sec.-Butyl, tert.-Butyl, 2-Chloreth-1-yl, 2-Hydroxyeth-1-yl, 2-Hydroxyprop-1-yl, 2-Hydroxybut-1-yl, 4-Chlorphen-1-yl, 2-Chlorphen-1-yl, 2-Methylphen-1-yl, 4-Methylphen-1-yl, 2-Cyaneth-1-yl, 2-Methoxiphen-1-yl, 4-Methoxiphen-1-yl, 2-(Methancarbonyloxi)-eth-1-yl, 2-(Ethancarbonyloxi)-eth-1-yl, 2-(Propancarbonyloxi)-eth-1-yl, 2-(Butancarbonyloxi)-eth-1-yl, Prop-2-en-1-yl, But-3-en-1-yl, Pent-1-en-4-yl, Hex-5-en-1-yl, Hept-6-en-1-yl, Oct-7-en-1-yl, Non-8-en-1-yl, Dec-9-en-1-yl oder Undec-10-en-1-yl bevorzugt sind; oder Wasserstoffatome oder Eth-1-yl-2-carbonsäuremethyl-, -ethyl-, -propyl- oder -butylester. Von all diesen sind wiederum Wasserstoffatome, Methyl, Ethyl, Butyl, Phenyl oder 4-Ethoxi-phen-1-yl ganz besonders bevorzugt.

Beispiele geeigneter Gruppen Q in Resten $R^2$ der allgemeinen Formel III und IV sind 1,4-Phenylen, 2-Methyl-phen-1,4-ylen, 2-Ethyl-phen-1,4-ylen oder 1,4-Naphthylen, von denen 1,4-Phenylen ganz besonders bevorzugt wird.

Beispiele geeigneter Reste $R^8$ in Resten $R^2$ der allgemeinen Formel IV sind Pyrrol-1-yl, Imidazol-1-yl, Pyrazol-1-yl, Indol-1-yl, 1H-Indazol-1-yl, Purin-7-yl, Carbazol-9-yl, ß-Carbolin-9-yl, $\Delta^2$- und $\Delta^3$-Pyrrolin-1-yl, $\Delta^2$-, $\Delta^3$- und $\Delta^4$-Pyrazolin-1-yl, $\Delta^2$-, $\Delta^3$- und $\Delta^4$-Imidazolin-1-yl, Indolin-1-yl, Isoindolin-1-yl, $\Delta^2$-3-Methylpyrazolin-1-yl, $\Delta^2$-3,5,5-Trimethylpyrazolin-1-yl, $\Delta^2$-3-Methyl-5-phenylpyrazolin-1-yl, $\Delta^2$-3,5-Diphenylpyrazolin-1-yl, Pyrrolidin-1-yl, Imidazolidin-1-yl, Pyrazolidin-1-yl, 1,2-Oxazolidin-1-yl, 1,2-Thiazolidin-1-yl, 1-Piperidino, Morpholin-4-yl, Piperazin-1-yl, 4-Methylpiperazin-1-yl, Phenoxazin-10-yl, Phenothiazin-10-yl, Perimidin-1-yl, Perhydrophenazin-5-yl, $\Delta^3$, $\Delta^5$-1,3-Diazepin-1-yl oder Perhydro-1,3-diazepin-1-yl. Von diesen sind wiederum Pyrrolidin-1-yl, 1-Piperidino, Morpholin-1-yl, 4-Methylpiperazin-1-yl, Pyrazolidin-1-yl, $\Delta^2$-3-Methylpyrazolin-1-yl, $\Delta^2$-3,5,5-Trimethylpyrazolin-1-yl, $\Delta^2$-3-Methyl-5-phenyl-pyrazolin-1-yl und $\Delta^2$-3,5-Diphenylpyrazolin-1-yl ganz besonders bevorzugt.

Beispiele für besonders vorteilhafte Reste $R^2$ in der allgemeinen Formel III und IV sind demnach 4-N,N-Dimethylamino-, 4-N,N-Diethylamino-, 4-N,N-Dibutylamino-, 4-N-Ethyl-N-methylamino-, 4-N-phenylamino-, 4-N,N-Diphenylamino- und 4-[N-(4′-Ethoxiphen-1′-yl)-N-methylamino]-phen-1-yl; oder 4-(Pyrrolidin-1′-yl)-, 4-(1′-Piperidino)-, 4-(Morpholin-1′-yl)-, 4-(4′-Methylpiperazin-1′-yl)-, 4-(Pyrazolidin-1′-yl)-, 4-($\Delta^{2'}$-3′-Methylpyrazolin-1′-yl)-, 4-($\Delta^{2'}$-3′,5′,5′-Trimethylpyrazolin-1-yl)-, 4-($\Delta^{2'}$-3′-Methyl-5′-phenyl-pyrazolin-1-yl)- und 4-($\Delta^{2'}$-3′,5′-Diphenylpyrazolin-1′-yl)-phen-1-yl.

Beispiele geeigneter Reste $R^2$ in der allgemeinen Formel I, welche einen über ein Kohlenstoffringatom mit dem Naphthalolactam-Grundgerüst verbundener, substituierter oder unsubstituierter, monocyclischer oder anellierter Heterocyclus aus der Klasse der Azole, der Azoline, der partiell hydrierten Azine und der Azine darstellen, sind N-Methyl-pyrrol-2-yl, N-Ethyl-3-phenyl-pyrrol-2-yl, N-Methyl-4-phenyl-imidazol-2-yl, N-Phenyl-3,5,5-trimethyl-pyrazol-1-yl, 5-Methyl-2-phenyl-1,3-oxazol-4-yl, 4-N,N-Dimethylamino-1,3-oxazol-2-yl, 5-N,N-Diethylamino-1,3,4-oxadiazol-2-yl, 5-N,N-Diphenylamino-1,3,4-oxadiazol-2-yl, 4-Phenyl-1,3-thiazol-5-yl, 4-Phenyl-2-N,N,-dimethylamino-1,3-thiazol-5-yl, 4-Phenyl-2-N,N-diethylamino-1,3-thiazol-5-yl, 4-Phenyl-1,3-thiazol-2-yl, 2-Phenyl-1,3-thiazol-4-yl, 2,4-Diphenyl-1,3-thiazol-5-yl, 4-(Naphth-1′-yl)-1,3-thiazol-5-yl; 4-(4′-Methylphen-1′-yl)-2-N,N-dimethylamino-, -2-N,N-diethylamino-, -2-N-ethyl-N-phenyl-amino- und -2-N,N-diphenylamino-1,3-thiazol-5-yl; 4-(Naphth-1′-yl)-2-N,N-dicyclohexylamino-, -2-N,N-di(phenylmethyl)amino-, -2-N-phenyl-N-(phenylmethyl)amino-; -2-N-cyclohexyl-N-(phenylmethyl)amino- und -2-piperidino-1,3-thiazol-5-yl; 4-(4'-Nitrophen-1'-yl)-2-N,N-dimethylamino- und -2-N,N-diethylamino-1,3-thiazol-5-yl; 4-(4'-Chlorphen-1'-yl)-2-N,N-diethylamino-, -2-N,N-dicyclo pentylamino, -2-N-[2'-(4"-methylphen-1"-yl)eth-1'-yl]-N-methyl-amino- und -2-N,N-di-n-hexyl-amino-1,3-thiazol-5-yl; 4-[4'-(But-1"-oxi)-phen-1'-yl]-2-N,N-di-n-hexylamino-1,3-thiazol-5-yl, 4-(2',4'-Dimethylphen-1'-yl)-2-($\Delta^{2'}$-3',5',5'-trimethylpyrazolin-1'-yl)-1,3-thiazol-5-yl, 4-Phenyl-2-(4'-methyl-piperazin-1'-yl)-1,3-thiazol-5-yl, 4-(2',4',6'-Trichlorphen-1'-yl)-2-(pyrrolidin-1'-yl)-1,3-thiazol-5-yl, 4-(4'-Bromphen-1'-yl)-2-N,N-diphenylamino-1,3-thiazol-5-yl, 4-(Naphth-2'-yl)-2-N,N-diethylamino-1,3-thiazol-5-yl, 4-Phenyl-2-N-methyl-N-(4'-ethoxiphen-1'-yl)-amino-1,3-thiazol-5-yl, 2-N,N-diethylamino-1,3-thiazol-5-yl, N-Ethyl-carbazol-2-yl, N-Propyl-isoindolin-5-yl, N-Methylindol-3-yl, N-Methyl-2-phenyl-indol-3-yl, N-Hexylindol-3-yl, N-Methyl-5-chlor-indol-3-yl, N-Methyl-1H-indazol-5-yl, Pyridin-2-yl, Pyrimidin-2-yl, Pyridin-4-yl, Pyridin-3-yl, Pyrazin-2-yl, Pteridin-2-yl, Acridin-3-yl, 1,7-Phenanthrolin-3-yl, Pyridazin-3-yl, Phenazin-1-yl, N-Methylphenoxazin-2-yl, N-Phenylphenothiazin-3-yl, N-Ethylperimidin-4-yl, 1-Ethyl-, 1-(2'-Hydroxyethyl)-, 1,2,2,4-Tetramethyl, 2,2,4-Trimethyl-1-ethyl-, 2,2,4-Trimethyl-1-(2'-methoxiethyl)- oder 2,2,4-Trimethyl-(2'-methancarbonyloxi)-benzopiperidin-6-yl; 4-(2'-Hydroxyethyl)- oder 4-[2'-(Prop-2"-en-1"-yl-oxi)-eth-1'-yl]-benzomorpholin-6-yl; 4H-Chinolizin-2-yl, Isochinolin-3-yl, Chinolin-2-, -3-, -6- oder -8-yl; Phthalazin-1-yl, 1,8-Naphthyridin-2-oder -5-yl, Chinoxalin-2-yl, Chinazolin-2-yl, Cinnolin-3-yl, Phenanthridin-6- oder -3-yl, 8-N-Butylamino-, 8-N-(2'-Hydroxyethyl)amino- oder 8-N-(2'-Methoxiethyl)amino-chinolin-6-yl; 2,6-Dihydroxy-pyridin-3-yl, 4-Methyl-pyridin-2-yl, 2-Hydroxy-3-cyan-pyridin-5-yl, 4-Chlorpyridin-2-yl, 2,6-Dihydroxy-3-cyan-4-methyl-pyridin-5-yl, 4-(4'-Chlorphen-1'-yl)-pyridin-2-yl, 4-Methyl-3-cyan-2-N-phenylamino-6-N'-(2'-methoxieth-1'-yl)amino-pyridin-5-yl, 4-Methyl-3-cyan-2,6-bis-[N-(3'-methoxiprop-1'-yl)amino]-pyridin-1-yl oder 4-Methyl-3-cyan-2-N-butylamino-6-N'-(3'-methoxi-prop-1'-yl)amino-pyridin-6-yl. Von diesen sind 4-Phenyl-2-N,N-dimethylamino-1,3-thiazol-5-yl, 4-Phenyl-2-N,N-diethylamino-1,3-thiazol-5-yl, N-Ethyl-carbazol-2-yl, N-Methyl-2-phenylindol-3-yl und 2,6-Dihydroxy-3-cyan-4-methyl-pyridin-5-yl besonders vorteilhaft.

Desweiteren kommen als Reste $R^2$ in den erfindungsgemäß zu verwendenden Naphtholactamfarbstoffen der allgemeinen Formel I Reste der allgemeinen Formel V in Betracht.

In der allgemeinen Formel V steht q für 0 oder 1. Unabhängig hiervon steht r für 0, 1 oder 2.

Beispiele geeigneter Reste $R^9$ und $R^{11}$ in der allgemeinen Formel V sind Wasserstoffatome oder, sofern q für 1 steht, zusammen eine ggf. durch $C_1$-bis $C_4$-Alkyl substituierte $C_2$- bis $C_3$-Alkylkette wie Ethylen, Propan-1,2-diyl, Propan-1,3-diyl, Butan-1,3-diyl, Butan-2,3-diyl, 2,2-Dimethylpropan-1,3-diyl oder Hexan-1,4-diyl oder zusammen eine oder zwei Carbonylgruppen.

Hierbei resultieren für die anspruchsgemäße Bedingung:

"q = 1 und $R^9$ und $R^{11}$ zusammen eine ggf. substituierte $C_2$- bis $C_3$-Alkylkette",

Reste $R^2$ der allgemeinen Formel V-a oder V-b,

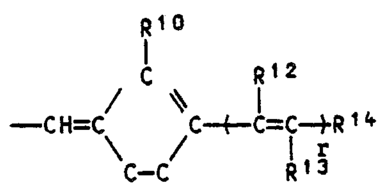

V-a

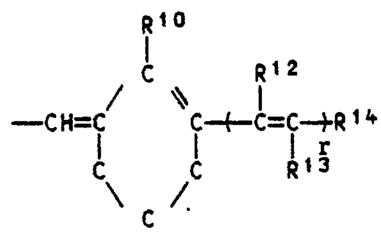

V-b

worin die weiteren Indices und Variablen die nachstehend näher erläuterte anspruchsgemäße Bedeutung haben.

Des weiteren resultiert für die anspruchsgemäße Bedingung:

" q = 1 und $R^9$ und $R^{11}$ zusammen eine Carbonylgruppe",

ein Rest $R^2$ der allgemeinen Formel V-c,

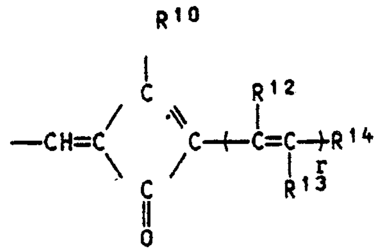

V-c

worin die weiteren Indices und Variablen die nachstehend näher erläuterte anspruchsgemäße Bedeutung haben.

Außerdem resultiert für die anspruchsgemäße Bedingung:

"q = 1 und $R^9$ und $R^{11}$ je eine Carbonylgruppe"

ein Rest $R^2$ der allgemeinen Formel V-d,

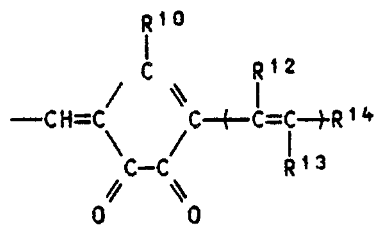

V-d

worin die weiteren Indices und Variablen die nachstehend näher erläuterte anspruchsgemäße Bedeutung haben.

Beispiele geeigneter Reste $R^{10}$, $R^{12}$ und $R^{13}$ in den allgemeinen Formeln V bis V-d sind Wasserstoffatome, Halogenatome, Sauerstoffatome, insbesondere elektrisch einfach negativ geladene, Cyan, Nitro, Hydroxy, die vorstehend beschriebenen Reste $R^1$, Methoxi, Ethoxi, Propyloxi, Butyloxi, Pentyloxi, Hexyloxi, Cyclopentyloxi, Cyclohexyloxi, 4-Methylcyclohexyloxi, Phenyloxi, 2-Methylphen-1-yl-oxi, 4-Methylphen-1-yl-oxi, Naphth-1-yl-oxi, Benzyloxi (= Phenylmethyloxi), 2-Phenyl-eth-1-yl-oxi, 3-Phenyl-prop-1-yl-oxi, 4-Phenyl-but-1-yl-oxi, Methoxicarbonyl, Ethoxicarbonyl, Prop-1-yl-oxicarbonyl, Prop-2-yl-oxicarbonyl, But-1-yl-oxicarbonyl, But-2-yl-oxicarbonyl, Pent-1-yl-oxicarbonyl, Hex-1-yl-oxicarbonyl, Cyclopentyloxicarbonyl, Cyclohexyloxicarbonyl, Benzyloxicarbonyl, 2-Phenyl-eth-1-yl-oxicarbonyl, 3-Phenyl-prop-1-yl-oxicarbonyl, 4-(Naphth-2′-yl)-but-1-yl-oxicarbonyl, Phenyloxicarbonyl, Naphth-1-yl-oxicarbonyl, Naphth-2-yl-oxicarbonyl oder die entsprechenden homologen Aminocarbonyle, Oxisulfonyle, Sulfonyle oder Oxicarbonylaminyle oder die vorstehend beschriebenen Reste $R^2$, welche hier über ein Kohlenstoffringatom mit den olefinisch ungesättigten Grundgerüsten der allgemeinen Formeln V bis V-d verbundene, substituierte oder unsubstituierte, monocyclische oder anellierte Heterocyclen aus der Klasse der Azole, der Azoline, der Azine und der partiell hydrierten Azine darstellen.

Beispiele geeigneter Reste $R^{14}$ in den allgemeinen Formeln V bis V-d sind die vorstehend beschriebenen Reste $R^2$ der allgemeinen Formel III, die vorstehend beschriebenen Reste $R^2$ der allgemeinen Formel IV, die vorstehend beschriebenen Reste $R^2$, welche hier über ein Kohlenstoffringatom mit den olefinisch ungesättigten Grundgerüsten der allgemeinen Formeln V bis V-d verbundene, substituierte oder unsubstituierte, monocyclische oder anellierte Heterocyclen aus der Klasse der Azole, der Azoline, der Azine und der partiell hydrierten Azine darstellen, des weiteren Thiole wie Thiophen-2-yl (= Thien-2-yl), 4-Methyl-thien-2-yl, 4-Methyl-5-phenyl-thien-2-yl, 5-N,N-Dimethylamino- und 5-N,N-Diethylamino-thien-2-yl, Benzo[b]thien-2-yl, 4-Methyl-benzo[b]-thien-7-yl oder Naphtho[2,3-b]thien-2-yl oder Thianthren-2-yl, 2,3,7,8-Tetramethylthianthren-1-yl oder 3-Chlor-thianthren-7-yl.

Beispiele für weitere geeignete Reste $R^{14}$ in den allgemeinen Formeln V bis V-d sind die Reste der allgemeinen Formel VI.

In der allgemeinen Formel VI hat $R^1$ die vorstehend angegebene Bedeutung für die Reste $R^1$ in der allgemeinen Formel I.

Der Index s in der allgemeinen Formel VI steht für 0, 1, 2 oder 3. Unabhängig hiervon steht der Index t in der allgemeinen Formel VI ebenfalls für 0, 1, 2 oder 3. Die Indices s und t haben in der allgemeinen Formel I die selbe Bedeutung wie in der allgemeinen Formel VI.

Beispiele geeigneter Reste $R^3$ und $R^4$ in der allgemeinen Formel VI sind die vorstehend beschriebenen Reste $R^{10}$, $R^{12}$ oder $R^{13}$ der allgemeinen Formeln V bis V-d, die vorstehend beschriebenen Reste $R^1$ der

allgemeinen Formel I, Carbon-, Sulfon- oder Phosphonsäuregruppen, Methanthio, Ethanthio, Propan-1-thio, Propan-2-thio, Butan-1-thio, Butan-2-thio, tert.-Butylthio, Pentan-1-thio, Isopentan-1-thio, Hexan-1-thio, Hexan-2-thio, Cyclopentanthio, Cyclohexanthio, Benzenthio, 4-Methylbenzen-1-thio, 2-Methylbenzen-1-thio, 3-Chlorbenzen-1-thio, 4-Chlorbenzen-1-thio, 2-Ethylbenzen-1-thio, Naphthalen-1-thio, Naphthalen-2-thio, Phenylmethanthio, 2-Phenylethan-1-thio, 2-(4′-Cyanphen-1′-yl)-ethan1-thio, 3-Phenylpropan-1-thio, 6-Phenylhexan-1-thio oder die entsprechenden Oxisulfonyle, Sulfonyle oder Oxicarbonylaminyle oder N,N-Dimethyl-, N,N-Diethyl-,N,N-Di-n-propyl-, N,N-Di-iso-propyl-, N,N-Di-n-butyl-, N-n-butyl-N-tert.-butyl-, N,N-Di-pentyl-, N,N-Di-hexyl-, N,N-Diphenyl-, N-Methyl-N-phenyl-, N-Ethyl-N-phenyl-, N,N-Dibenzyl-, N,N-Di-(2-phenyleth-1-yl)-, N-Ethyl-N-benzyl-, N-Phenyl-N-benzyl-, N-(4′-Methylphenyl)-N-[2-(4′-cyanphen-1′-yl)-eth-1-yl]-, N,N-Dicyclopentyl-, N,N-Dicyclohexyl-, N-Cyclopentyl-N-cyclohexyl-, N-Methyl-N-cyclohexyl-, N-Ethyl-N-cyclohexyl-, N-Phenyl-N-cyclohexyl-, N-Benzyl-N-cyclohexyl- oder N-(2-Phenyl-eth-1-yl)-N-cyclohexylamino, -aminosulfonyl oder -aminocarbonyl. Hierbei sind die Reste $R^3$ und $R^4$ verschieden voneinander oder gleich.

Außerdem sind Kohlenstoff-, Stickstoff-, Sauerstoff- und/oder Schwefelatome, welche Bestandteile des Gerüsts von einem oder von mehreren an die Naphth-1,8-ylen-Gruppe der allgemeinen Formel VI anellierten Ringen darstellen, weitere Beispiele für geeignete Reste $R^3$ und $R^4$, wobei hier insbesondere die Substitutionsmuster VI-1 bis VI-15 in Betracht kommen:

VI-1, t = 2,

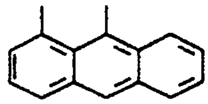

VI-2, t = 2,

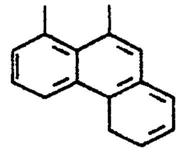

VI-3, s und t = 2,

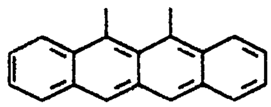

VI-4, s = 1, t = 2,

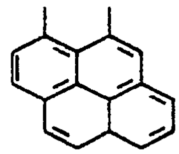

VI-5, s und t = 1,

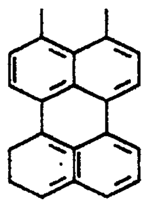

VI-6, s und t =1,

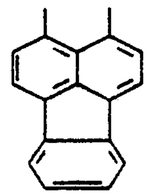

VI-7, t = 2,

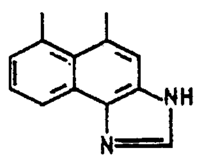

VI-8, t = 2,

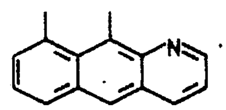

VI-9, t = 2,

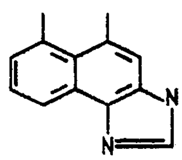

VI-10, t = 2,

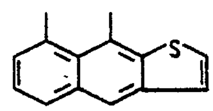

VI-11, s und t = 1,

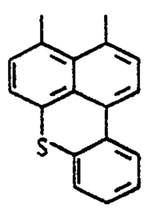

VI-12, t = 2,

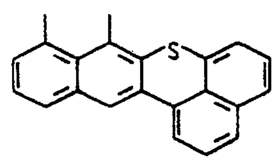

VI-13, s = 1, t = 2,

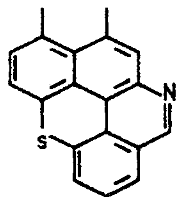

VI-14, s = 3, t = 2,

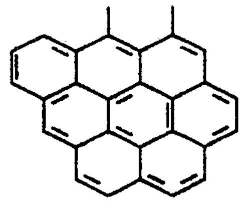

oder VI-15, t = 2,

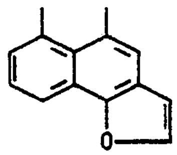

wobei das Substitutionsmuster VI-11 besonders bevorzugt wird.

In der allgemeinen Formel I haben die Variablen $R^3$ und $R^4$ sowie die Indices s und t die selbe Bedeutung wie in der Formel VI.

Außerdem kommen als Reste $R^2$ in den erfindungsgemäß zu verwendenden Naphtholactamfarbstoffe der allgemeinen Formel I Reste der allgemeinen Formel VII in Betracht, worin die Variablen $R^1$, $R^3$ und $R^4$ sowie die Indices s und t die selbe Bedeutung haben, wie sie bei der Formel VI angegeben ist, und worin $R^{15}$ den Rest einer CH-aciden Verbindung bezeichnet.

Bei "CH-aciden Verbindungen" handelt es sich um Verbindungen, welche locker gebundene Methylen- oder Methinprotonen in $\alpha$-Stellung zu einer oder zu zwei Aldehyd-, Keto-, Ester-, Nitril- oder Nitrogruppen aufweisen. Solche Verbindungen können bekanntermaßen die allgemein übliche Aldol-Kondensation, Aldol-Addition, die Perkin-Reaktion, die Knoevenagel-Kondensation oder die Mannich-Reaktion eingehen.

Beispiel geeigneter Reste $R^{15}$ sind Barbitursäurereste (= 1,3-Diazin-2,3,6-trion-5-yl) der allgemeinen Formel VIII,

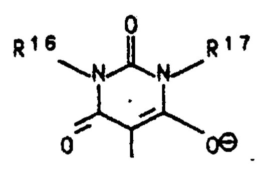

VIII

worin $R^{16}$ und $R^{17}$ voneinander verschieden oder gleich sind und $C_1$- bis C-22-Alkyl, $C_5$- bis $C_7$-Cycloalkyl, $C_6$- bis $C_{10}$-Aryl, $\omega$-Aryl-$C_1$- bis $\omega$-Aryl-$C_6$-Alkyl, Oxa-alkanyl, Aza-alkanyl oder Thia-alkanyl bezeichnen.

Beispiele geeigneter Reste $R^{16}$ und $R^{17}$ sind die vorstehend beschriebenen Alkyl-, Cycloalkyl-, Aryl- oder $\omega$-Aryl-Alkylreste $R^1$ der allgemeinen Formel I, die mit Alkoxiresten substituierten Alkylreste $R^1$ der allgemeinen Formel I, die mit Alkylthioresten $R^1$ substituierten Alkylreste $R^1$ der allgemeinen Formel I oder die mit Alkylaminoresten substituierten Alkylreste $R^1$ der allgemeinen Formel I, von denen Methyl, Ethyl, Butyl oder 6-Ethyl-4-oxadec-1-yl besonders bevorzugt wird.

Sofern man in den Naphtholactamfarbstoffe der allgemeinen Formel I Reste $R^2$ der allgemeinen Formeln V bis V-d, worin $R^{14}$ einen Rest der allgemeinen Formel VI darstellt, oder Reste $R^2$ der allgemeinen Formel VII verwendet, ist es von ganz besonderem Vorteil, wenn die Variablen $R^1$, $R^3$ und $R^4$ sowie die Indices s und t der allgemeinen Formeln VI und VII mit den betreffenden Variablen und Indices der allgemeinen Formel I identisch sind.

Beispiele geeigneter Anionen X in Naphtholactamfarbstoffen der allgemeinen Formel I sind Chlorid, Bromid, Iodid, Nitrat, Sulfat, Perchlorat, Bromat, Tetrafluorborat, Hexafluorphosphat, Hexafluorsilikat, Methansulfonat, Benzolsulfonat, Ethylsulfat, Phosphat, Salicylat, Oxalat, Acetat, Trifluormethansulfonat, Tertrachlorzinkat, Tetrachloraluminat, Hexachlorferrat, Hexafluorarsenat, Hexafluorantimonat, Hexachlorantimonat oder die aus der EP-A-0 224 261 bekannten Nickeldithiolat-Anionen.

Hierbei enthalten die erfindungsgemäß zu verwendenden Naphtholactamfarbstoffe der allgemeinen Formel I oder - kurz gesagt - die Naphtholactamfarbstoffe I kein Anion, wenn die elektrisch einfach positive Ladung des Naphthalolactamstickstoffs in der Formel I durch eine elektrisch einfach negative Ladung im

Naphtholactamfarbstoff I neutralisiert wird, was man ganz allgemein als eine "Betainstruktur" bezeichnet und was der anspruchsgemäßen Bedingung n = 0 entspricht.

Enthält der Naphthalolactamfarbstoff I darüber hinaus noch weitere einfach negative Ladungen, beispielsweise mehrere Sulfonsäuregruppen, so sind diese naturgemäß mit üblichen und bekannten Kationen verbunden. Auch hieraus ergibt sich die anspruchsgemäße Bedingung n = 0.

Ansonsten steht n, je nach Anzahl der elektrisch positiven Ladungen im Naphthalolactamfarbstoff I einerseits und der Anzahl der elektrisch negativen Ladungen in Anion X andererseits für 1/3, 1/2, 2/3, 1, 2 oder 3.

Beispiele für Naphtholactamfarbstoffe I, welche erfindungsgemäß mit ganz besonderem Vorteil verwendet werden, sind die Naphtholactamfarbstoffe I-1 bis I-120:

I-1

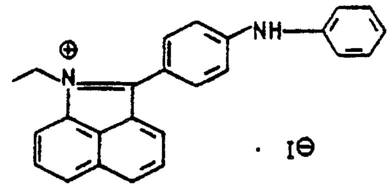

I-2

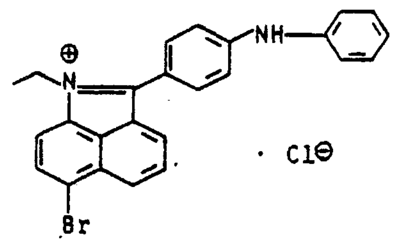

I-3

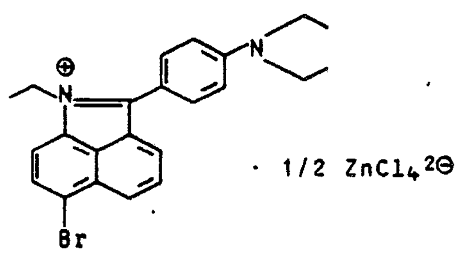

I-4

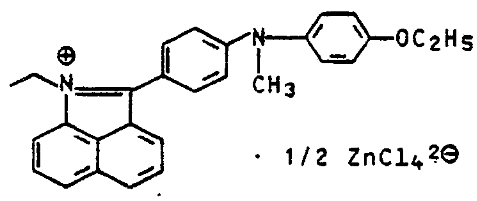

I-5

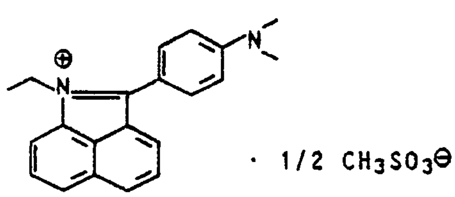

I-6

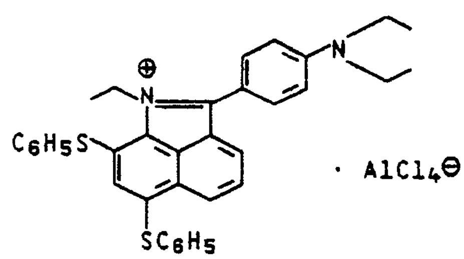

I-7

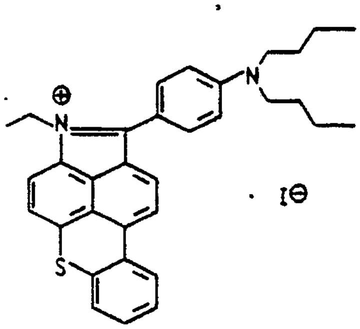

I-8

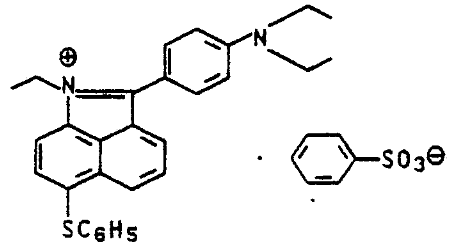

I-9

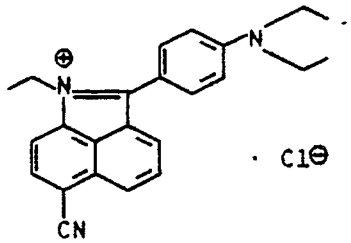

I-10

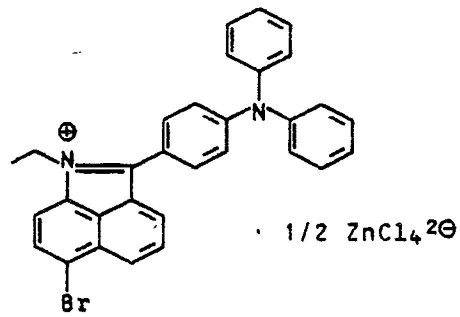

I-11

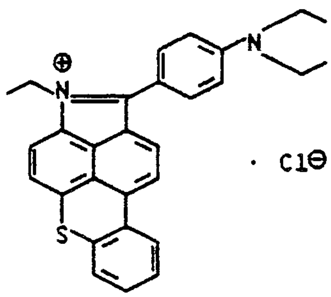

I-12

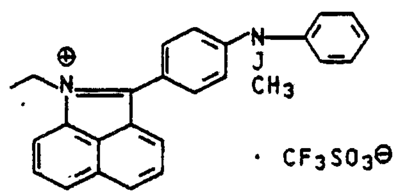

I-13

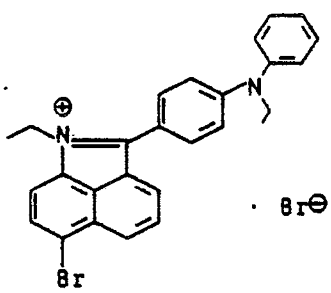

I-14

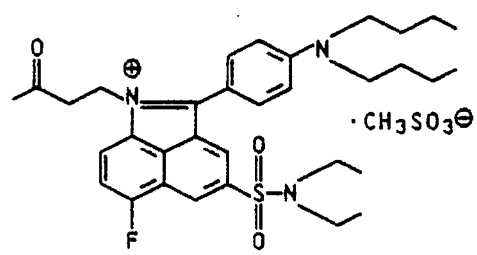

I-15

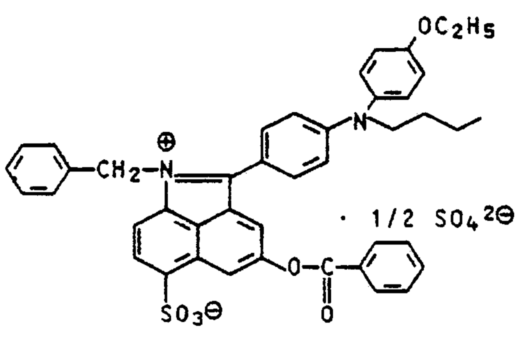

I-16

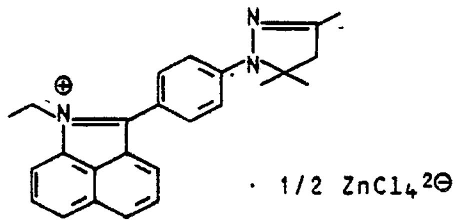

I-17

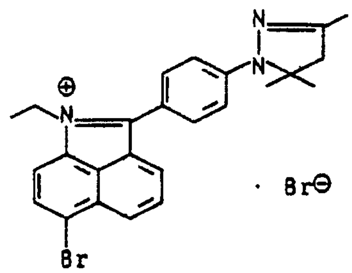

I-18

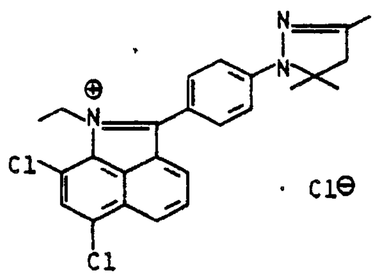

I-19

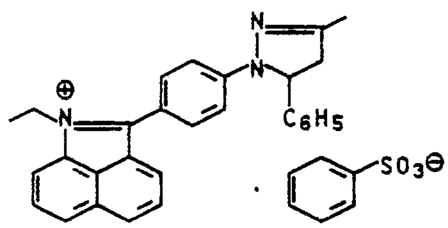

I-20

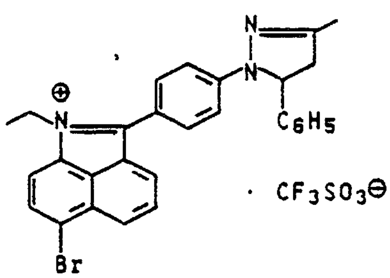

I-21

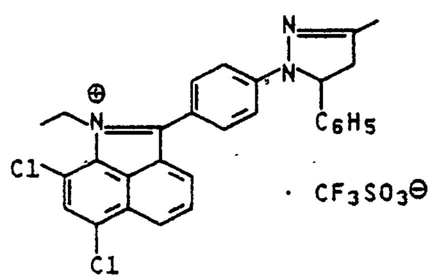

I-22

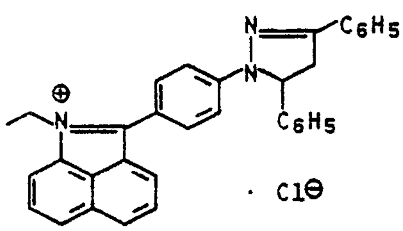

I-23

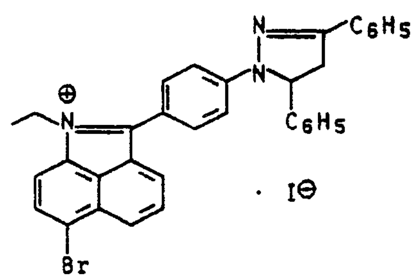

I-24

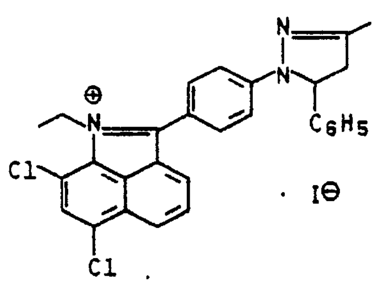

I-25

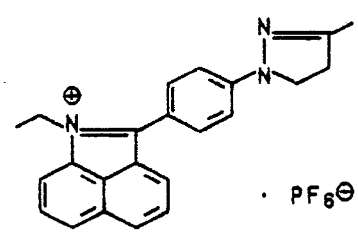

I-26

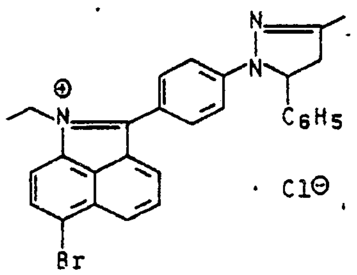

I-27

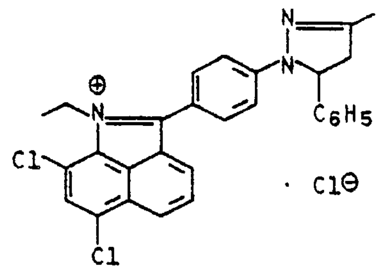

I-28

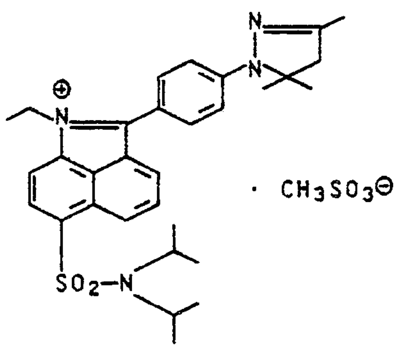

I-29

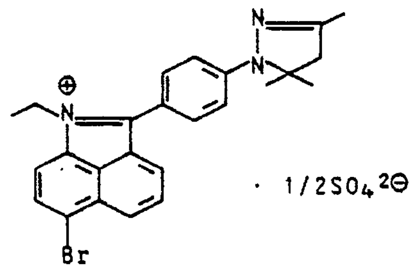

I-30

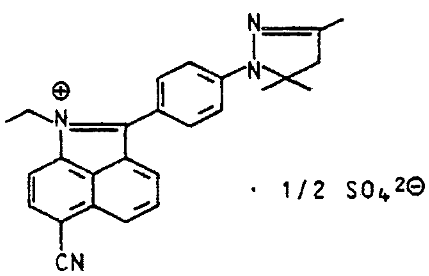

I-31

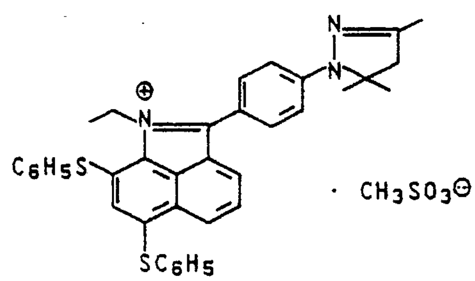

I-32

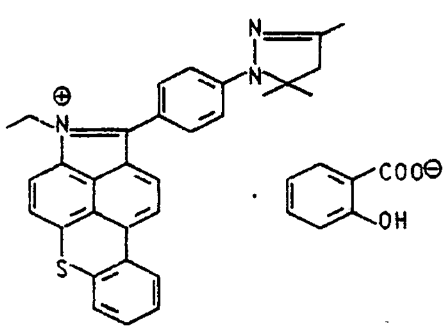

I-33

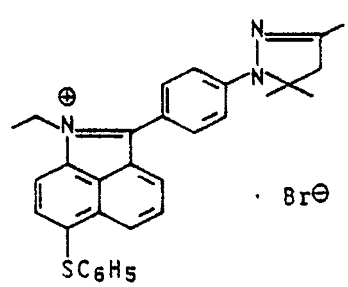

I-34

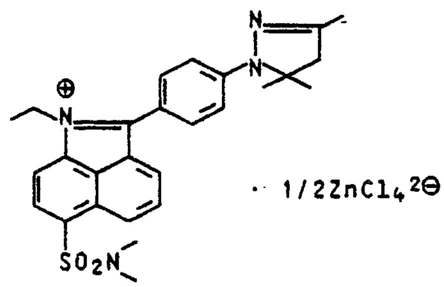

I-35

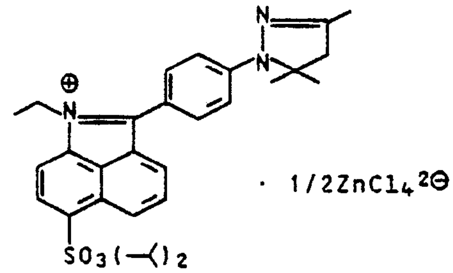

I-36

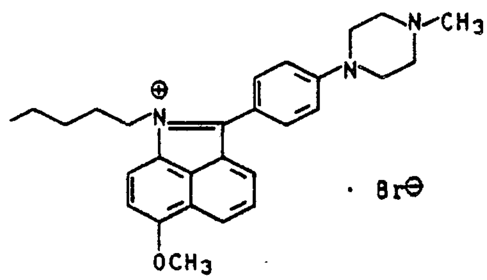

I-37

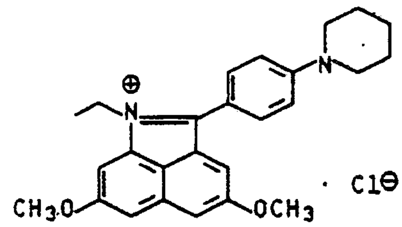

I-38

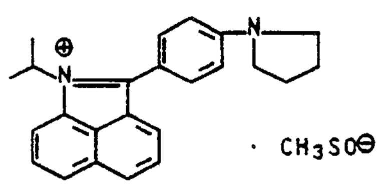

I-39

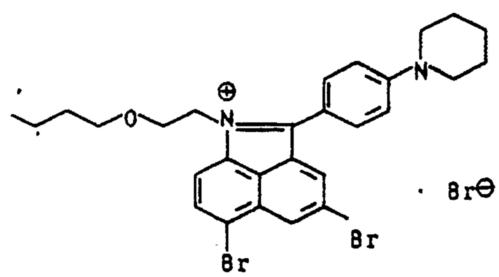

I-40

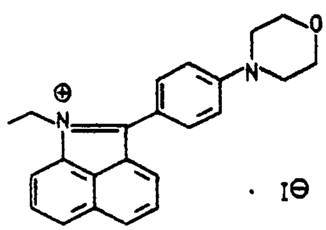

I-41

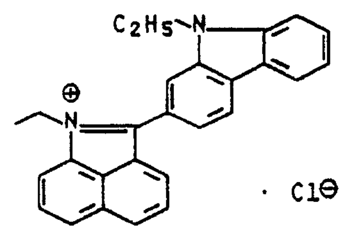

I-42

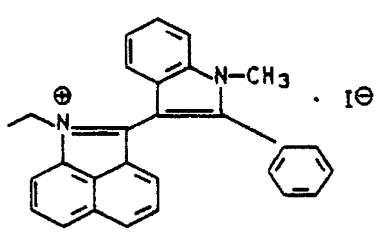

I-43

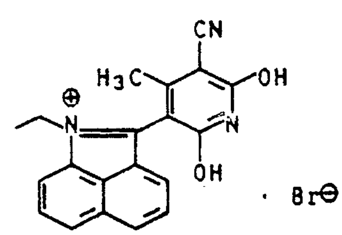

I-44

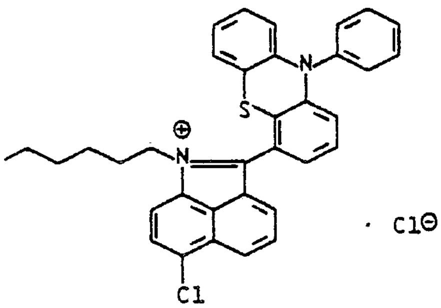

· $Cl^{\ominus}$

I-45

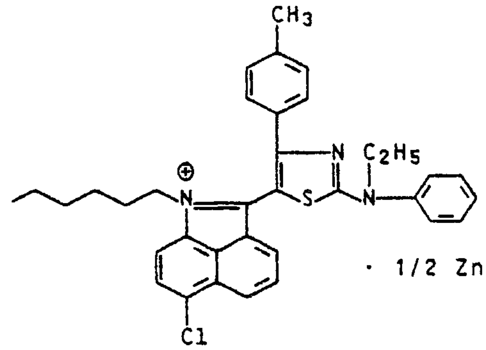

· 1/2 $ZnCl_4^{2\ominus}$

I-46

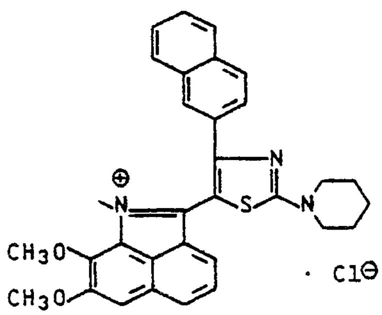

· $Cl^{\ominus}$

I-47

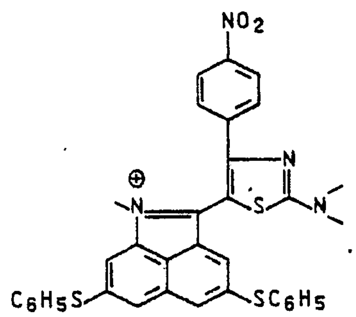

· 1/2 $ZnCl_4^{2\ominus}$

I-48

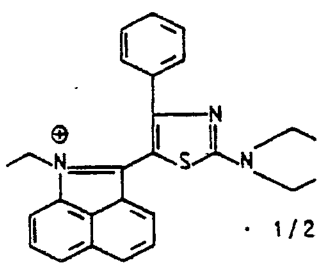

· 1/2 $ZnCl_4^{2\ominus}$

I-49

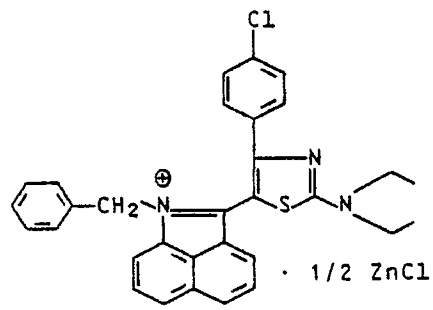

· 1/2 $ZnCl_2^{2\ominus}$

I-50

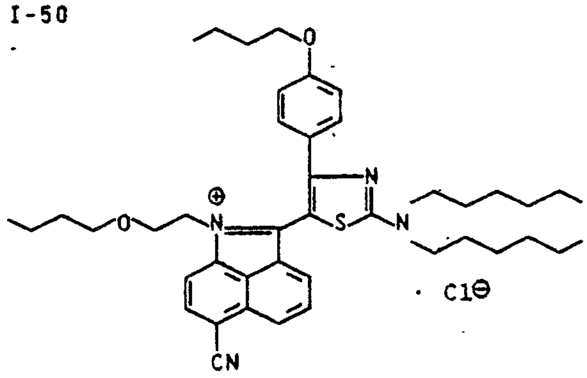

I-51

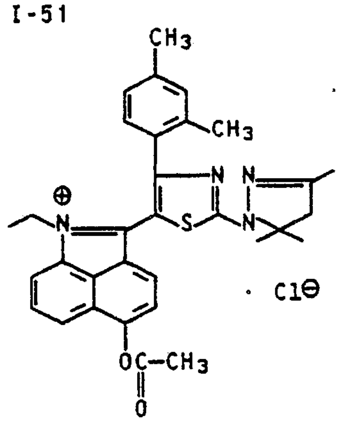

I-52

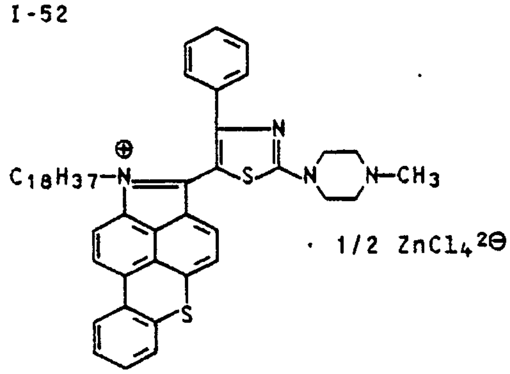

I-53

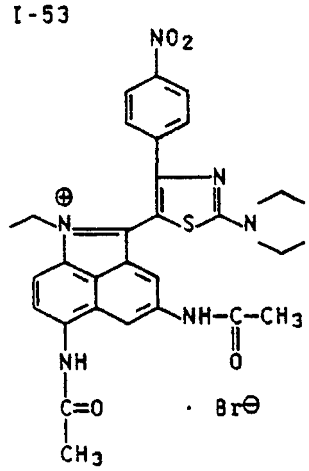

I-54

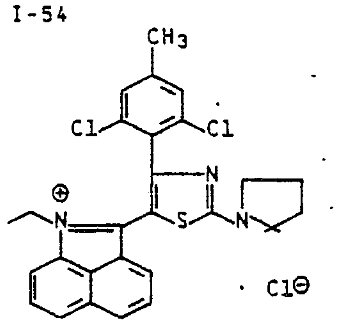

· Cl⊖

I-55

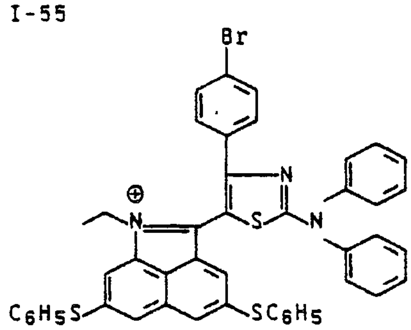

· 1/2 $ZnCl_4^{2\ominus}$

I-56

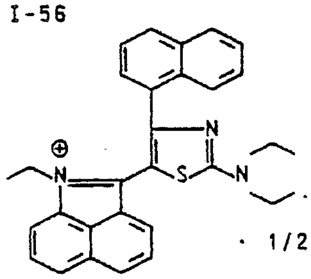

· 1/2 $ZnCl_4^{2\ominus}$

I-57

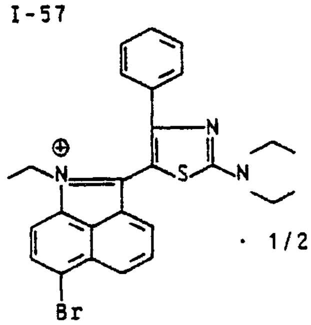

· 1/2 $ZnCl_4^{2\ominus}$

I-58

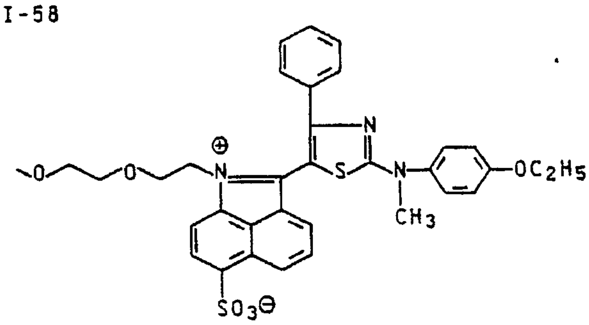

I-59

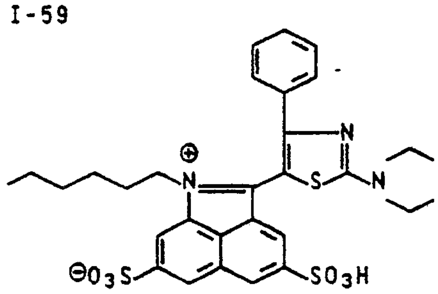

I-60

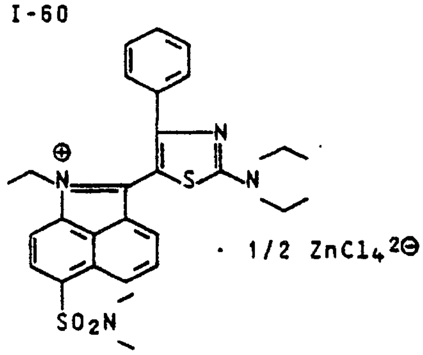

I-61

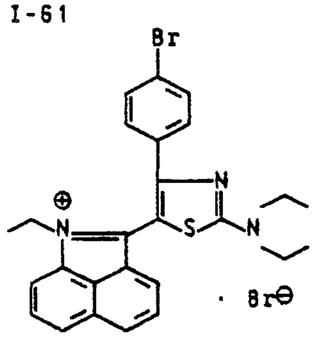

I-62

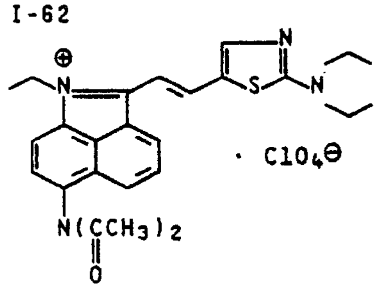

I-63

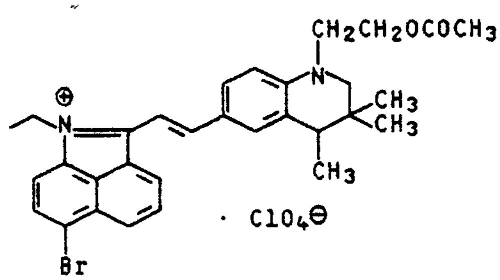

I-64

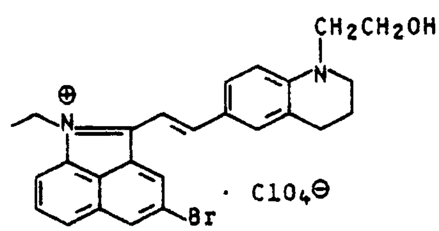

I-65

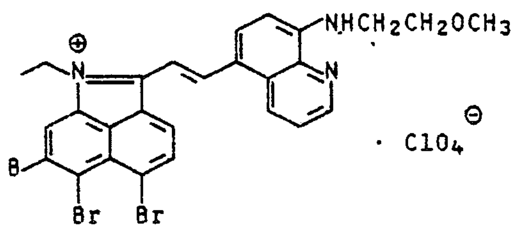

· $ClO_4^{\ominus}$

I-66

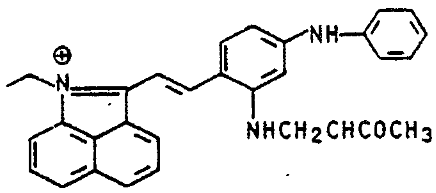

· $ClO_4^{\ominus}$

I-67

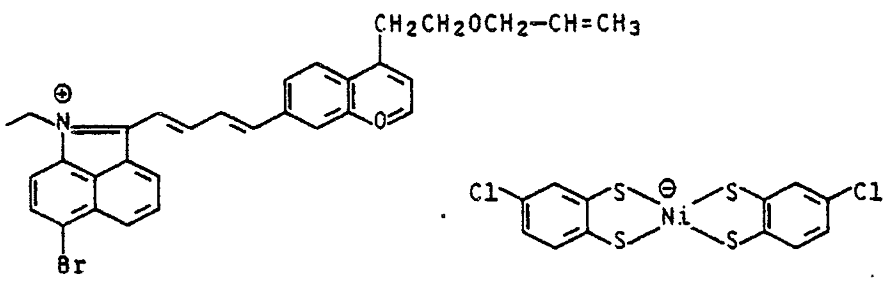

I-68

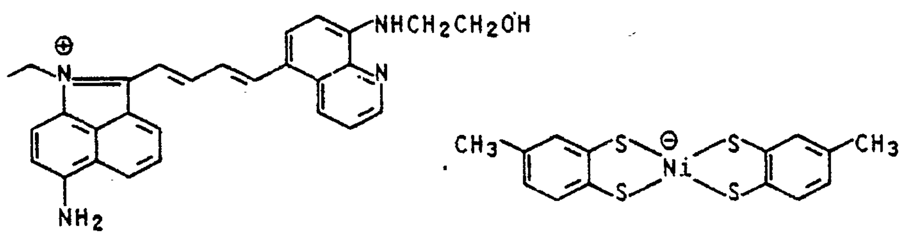

I-69

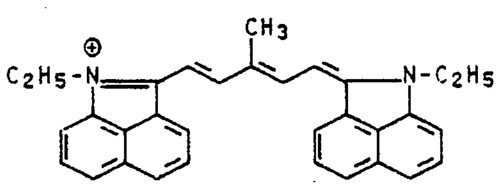

· $I^{\ominus}$

I-70

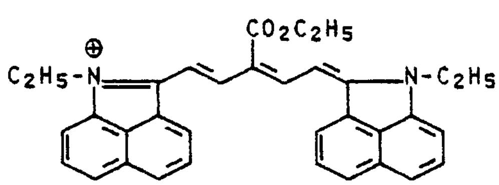

· $I^{\ominus}$

I-71

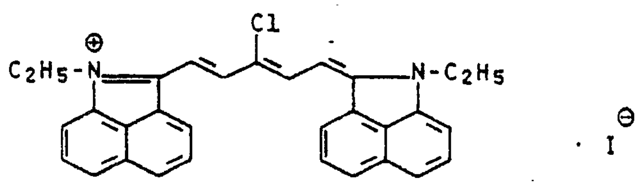

I-72

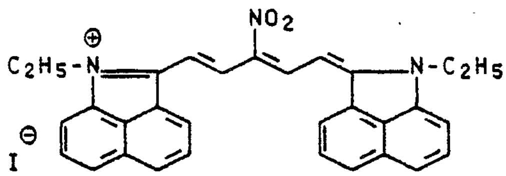

I-73

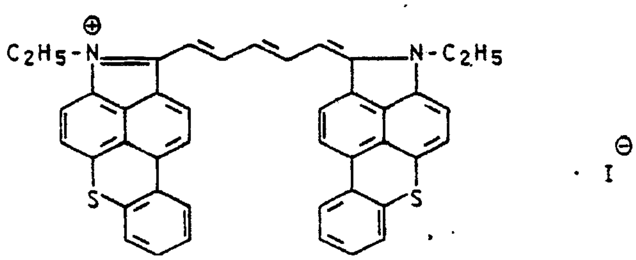

I-74

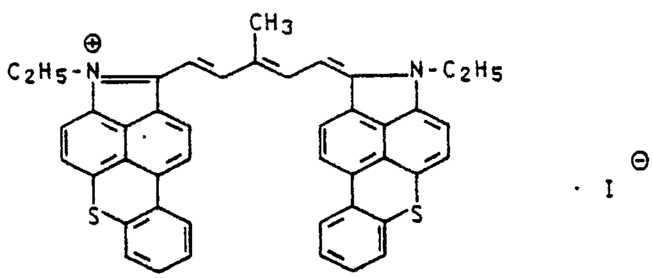

I-75

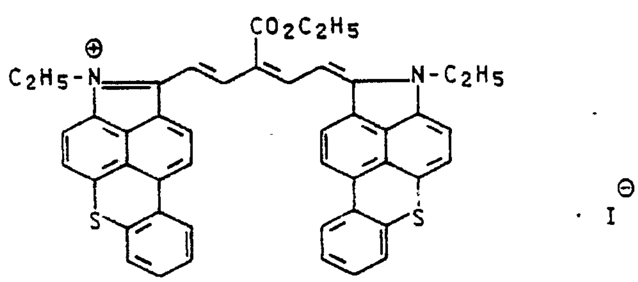

I-76

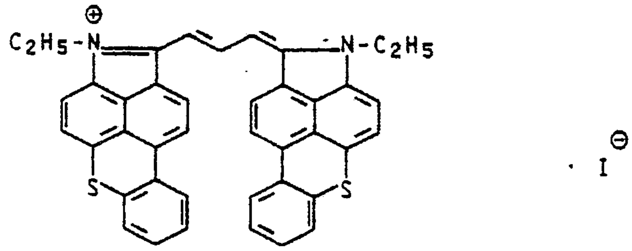

I-77

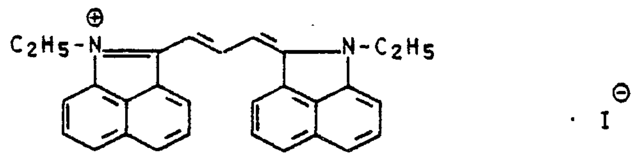

I-78

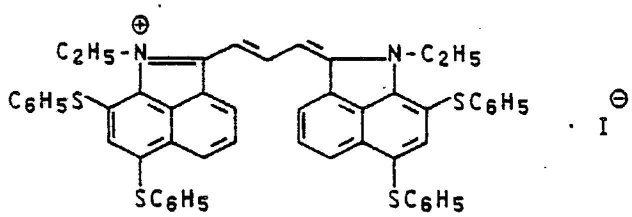

I-79

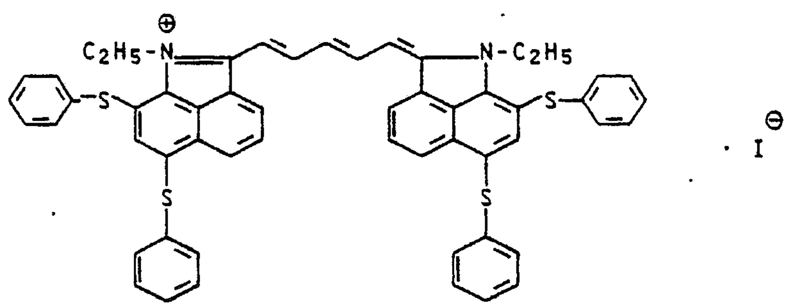

I-80

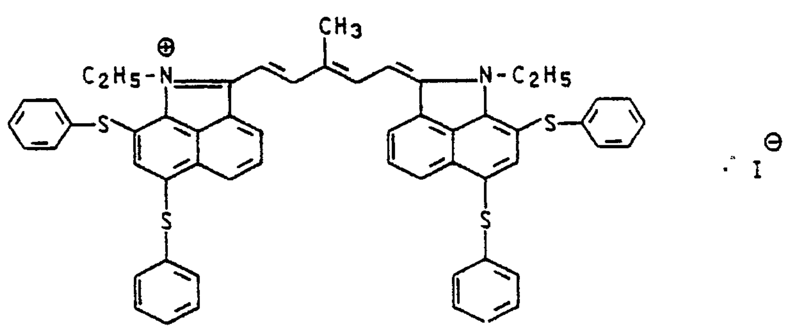

I-81

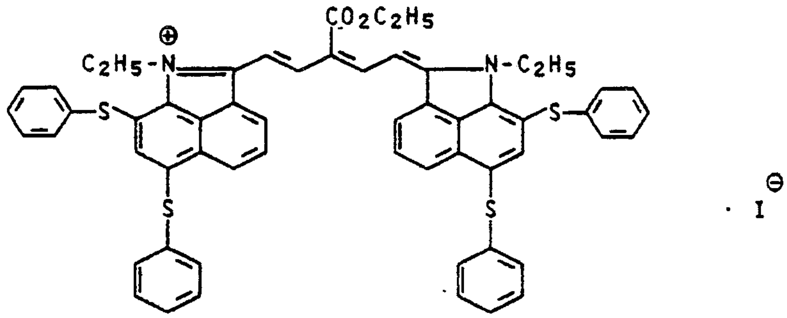

I-82

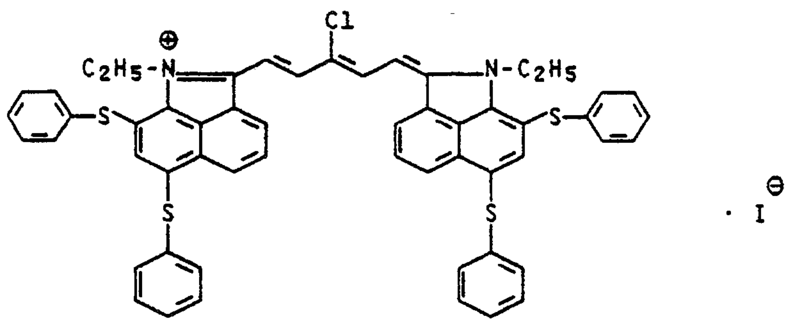

I-83

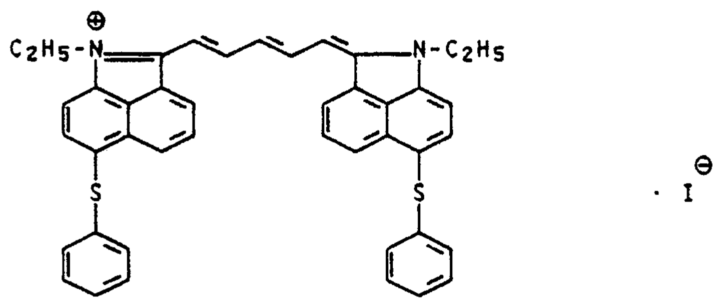

I-84

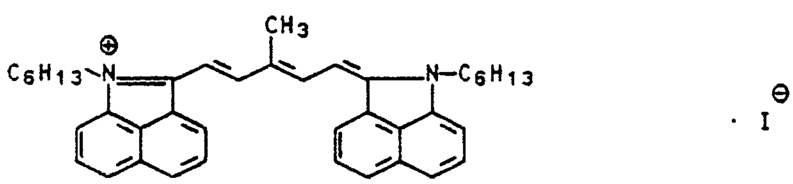

I-85

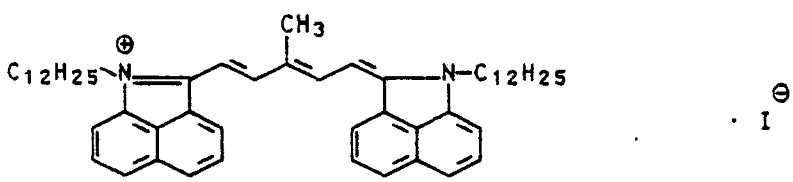

I-86

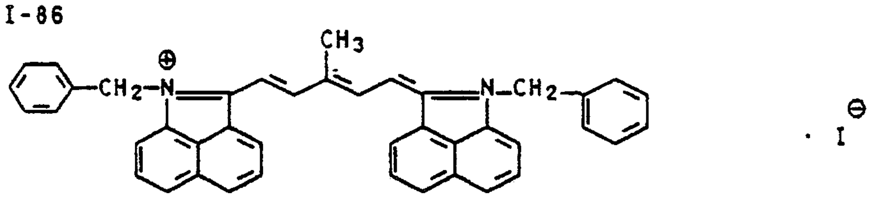

I-87

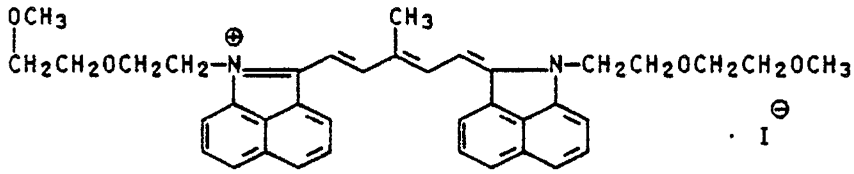

I-88

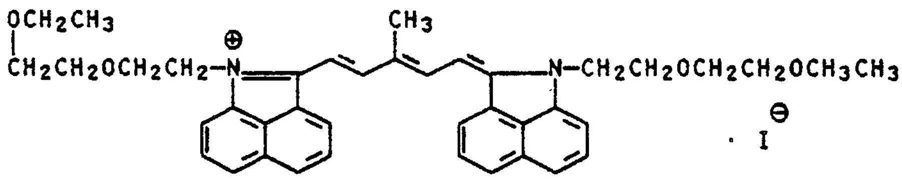

I-89

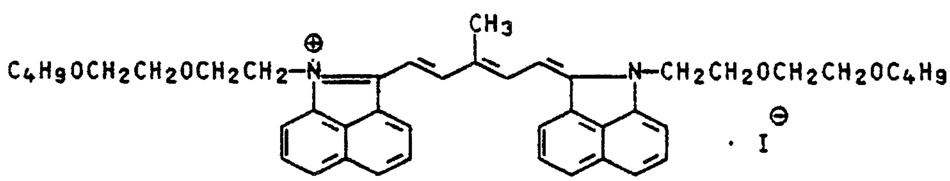

I-90

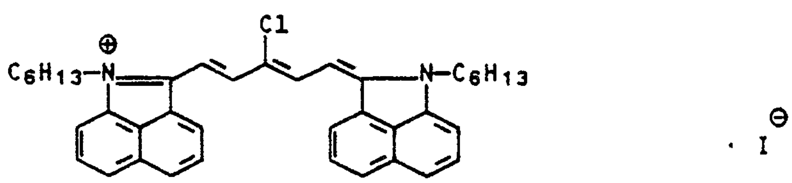

I-91

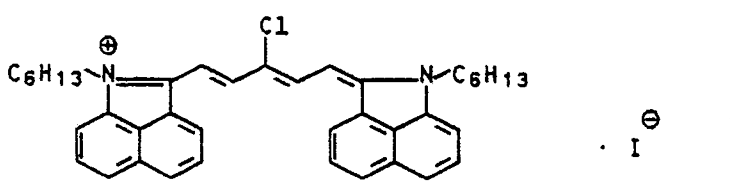

I-92

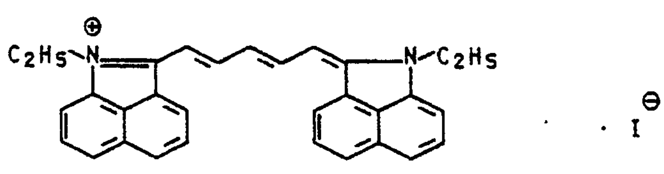

I-93

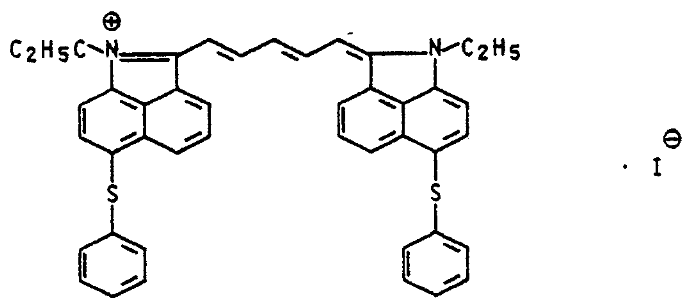

I-94

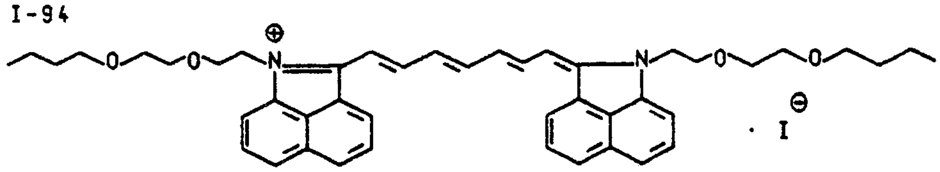

I-95

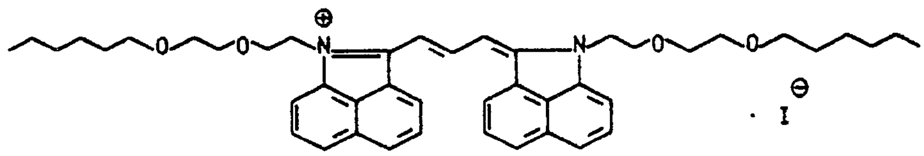

I-96

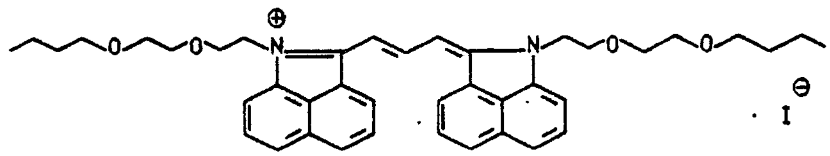

I-97

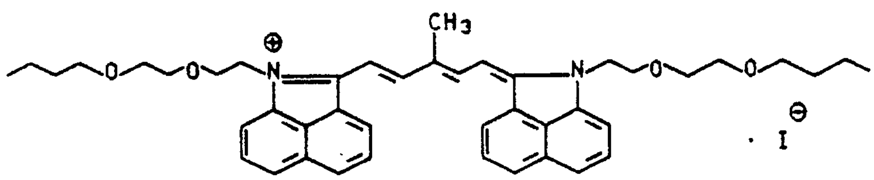

I-98

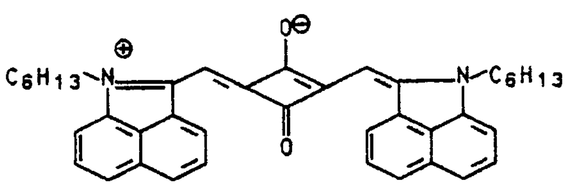

I-99

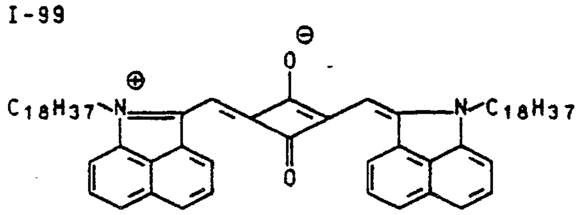

I-100

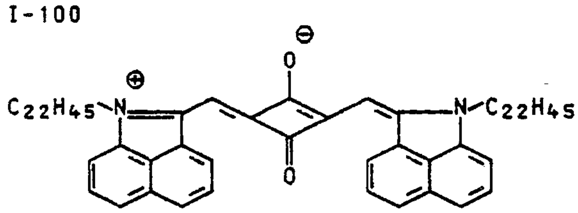

I-101

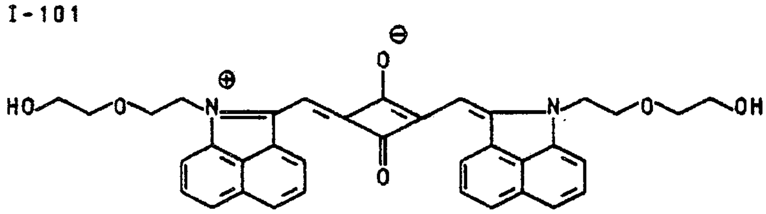

I-102

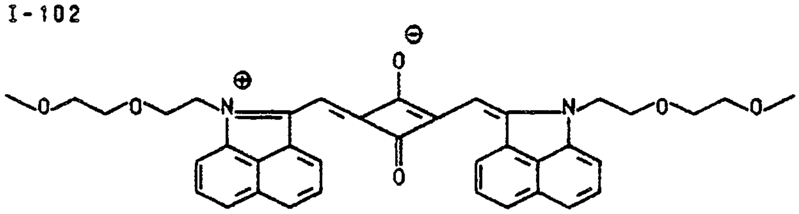

I-103

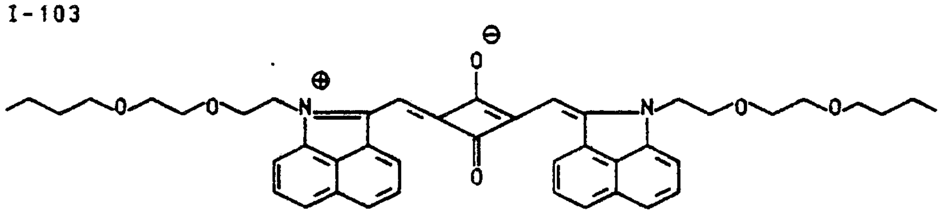

I-104

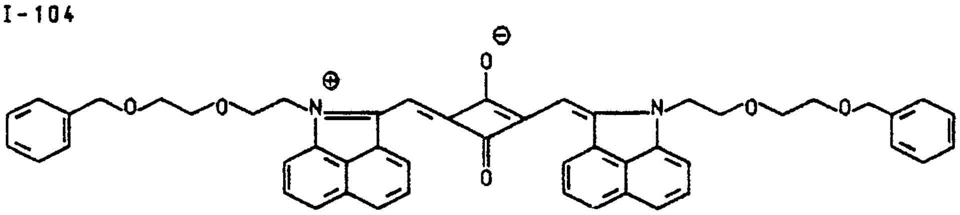

I-105

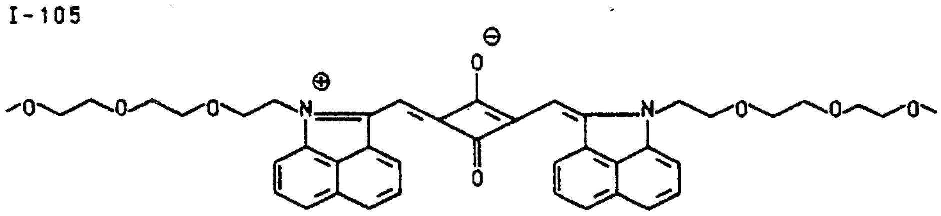

I-106

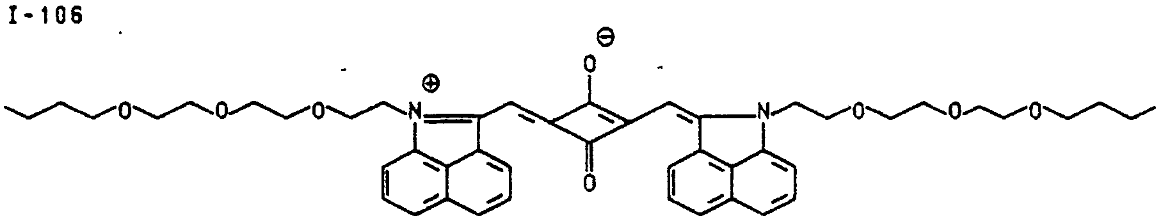

I-107

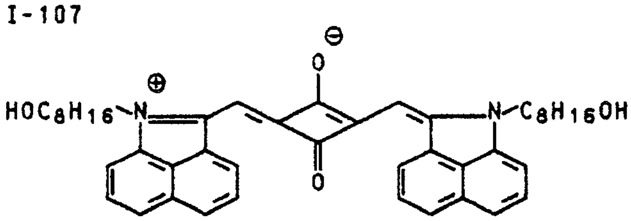

I-108

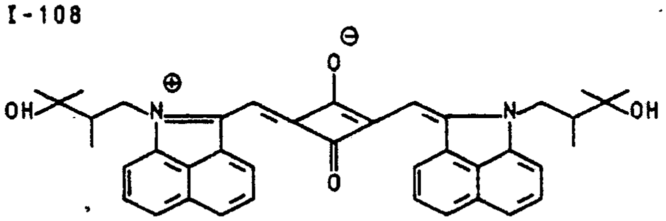

I-109

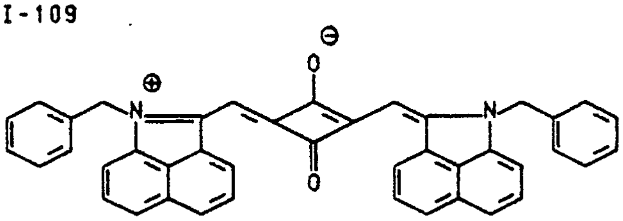

I-110

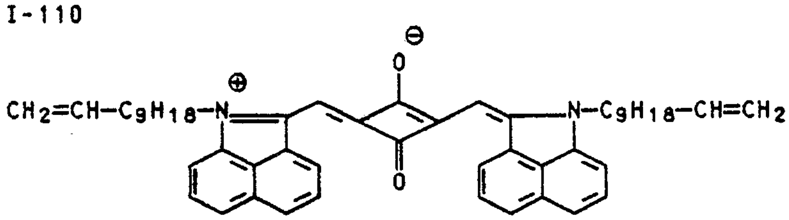

I-111

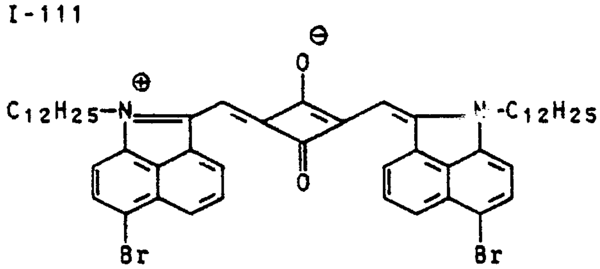

I-112

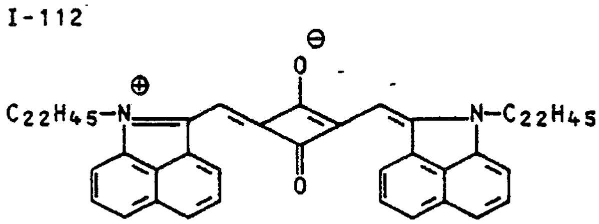

I-113

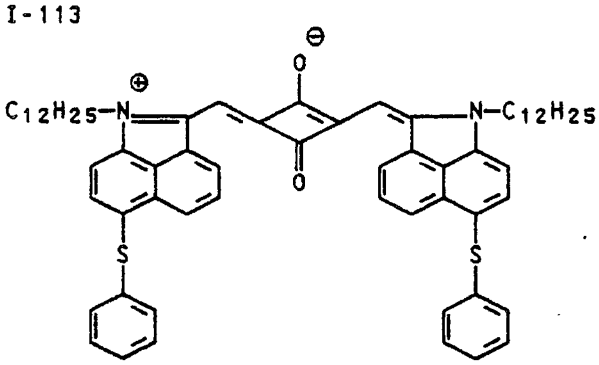

I-114

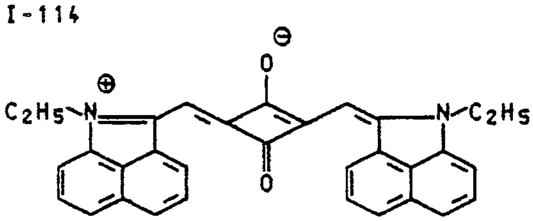

I-115

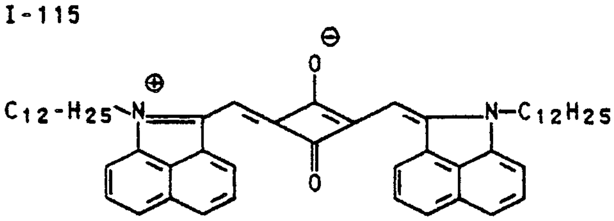

I-116

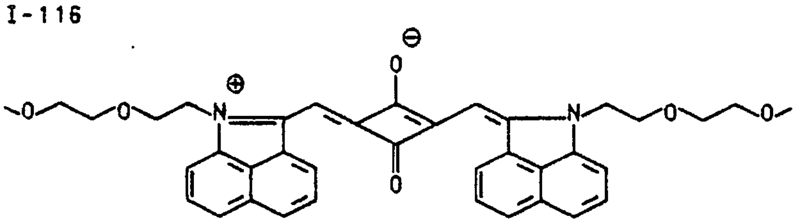

I-117

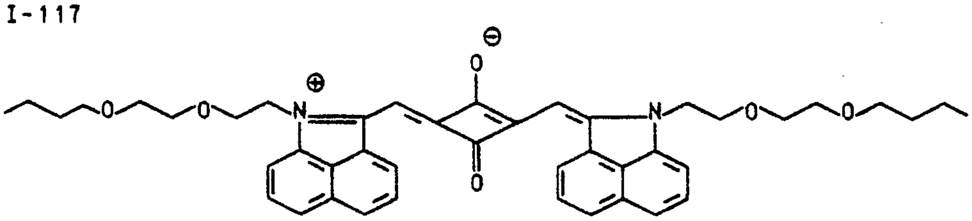

I-118

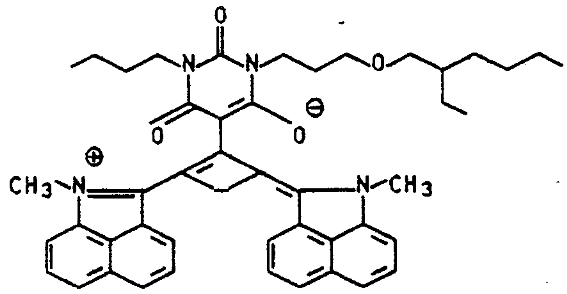

I-119

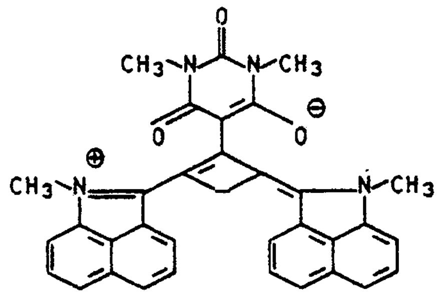

I-120

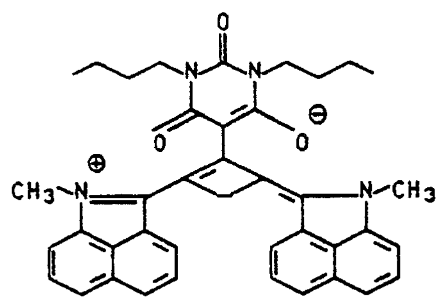

Beispiele für Naphtholactamfarbstoffe I, welche erfindungsgemäß mit ganz besonderem Vorteil verwendet werden und welche dann einen herausragenden technischen Effekt bewirken, sind die Naphtholactamfarbstoffe I-2, I-3, I-10, I-13, I-16, I-34, I-35, I-48, I-57, I-60, I-71, I-77, I-85, I-96, I-97, I-98, I-99, I-102, I-103, I-107 und I-115.

Die erfindungsgemäß zu verwendenden Naphtholactamfarbstoffe I sind in der neuen photoleitenden Schicht (B) als Sensibilisatoren ($b_2$) neben den Komponenten ($b_1$), ($b_3$) und ggf. ($b_4$) in einer Menge von 0,05 bis 20, vorzugsweise 0,1 bis 18, vorteilhafterweise 0,5 bis 15 und insbesondere 1,0 bis 10 Gew.-Teilen pro 100 Gew.-Teilen Bindemittel ($b_1$) enthalten.

Werden weniger als 0,05 Gew.-Teile dieser Sensibilisatoren ($b_2$) pro 100 Gew.-Teilen ($b_1$) zur neuen photoleitenden Schicht (B) hinzugegeben, so läßt deren Lichtempfindlichkeit zu wünschen übrig. Werden dagegen mehr als 20 Gew.-Teile ($b_2$) pro 100 Gew.-Teilen ($b_1$) angewendet, so kann unter Umständen die Dunkelleitfähigkeit unerwünschterweise stark ansteigen und die mechaniche Festigkeit der neuen photoleitenden Schicht (B) deutlich absinken, was trotz der vorzüglichen sonstigen Eigeschaften der Schicht (B) im allgemeinen nicht in Kauf genommen werden kann. Der Bereich von 0,05 bis 20 Gew.-Teilen ($b_2$) pro 100 Gew.-Teilen ($b_1$) stellt somit ein Optimum dar, innerhalb dessen Grenzen die Menge an ($b_2$) frei gewählt und dem jeweiligen technischen Problem, dem jeweiligen Anwendungszweck und/oder der jeweiligen stofflichen Zusammensetzung der erfindungsgemäßen Aufzeichnungsmaterialien weiter angepaßt wird. Hierbei richtet sich die gewählte Menge an Naphtholactamfarbstoffe I (Sensibilisator $b_2$) insbesondere nach der Menge an Ladungsträger transportierenden Verbindungen oder Photoleitern ($b_3$) und danach, ob weitere übliche und bekannte als Zusatzstoffe ($b_4$) Sensibilisatoren in der photoleitenden Schicht (B) enthalten sind.

Die erfindungsgemäß zu verwendenden Naphtholactamfarbstoffe I werden auch als separat vorliegende Sensibilisatorschicht verwendet. Hierbei liegt die Schicht aus einem oder mehreren Naphtholactamfarbstoffen I sowie ggf. einem oder mehreren Bindemitteln ($b_1$) dem elektrisch leitenden Träger (A) direkt auf und ist mit einer Schicht bedeckt, welche Bindemittel ($b_1$), Photoleiter ($b_2$) und ggf. Zusatzstoffe ($b_4$) enthält. Die Dicke der Sensibilisator- oder Naphtholactamfarbstoff I - Schicht liegt bei 0,005 bis 5, vorzugsweise 0,05 bis 3, vorteilhafterweise 0,08 bis 2 und insbesondere 0,1 bis 0,9 µm. Sofern diese Sensibilisatorschicht dünner als 0,005 µm ist, kann sie unter Umständen die Oberfläche des Trägers (A) nicht mehr vollständig und gleichmäßig bedecken und ihre Sensibilisatorwirkung, d.h. ihre Ladungsträger erzeugende Wirkung, kann für eine gegebenes technisches Problem nicht mehr ausreichend sein. Ist die Sensibilisatorschicht dicker als 5 µm, so kann dies den Abfluß elektrischer Ladungen bei der bildmäßigen Belichtung mit aktinischem Licht erschweren. Hinsichtlich der Sensibilisierung, d.h. der Erzeugung einer, ausreichenden Anzahl an Ladungsträgern, der Gleichmäßigkeit der Dicke, der Haftfestigkeit auf dem Träger (A) und der Vermeidung einer gewissen Sperrwirkung stellt somit der Dickenbereich von 0,005 bis 5 µm ein Optimum dar. Innerhalb dieses Bereichs wird die Dicke der Sensibilisatorschicht frei gewählt und dem jeweiligen technischen Problem, dem jeweiligen Anwendungszweck und/oder der jeweiligen stofflichen Zusammensetzung der erfindungsgemäßen Aufzeichnungsmaterialien weiter angepaßt.

Beispiele für erfindungsgemäß zu verwendende Naphtholactamfarbstoffe I mit der anhand der Naphtholactamfarbstoffe I-1 bis I-15 beispielhaft verdeutlichten Struktur und ihre Herstellung sind aus der DE-A-20 10 579, der DE-A-11 65 790, der DE-A-15 69 660 und der DE-A-23 28 163 bekannt.

Beispiele für erfindungsgemäß zu verwendende Naphtholactamfarbstoffe I mit der anhand der Naphtholactamfarbstoffe I-16 bis I-40 beispielhaft verdeutlichten Struktur und ihre Herstellung sind aus der JP-B-72-24244 und der DE-A-23 28 163 bekannt.

Beispiele für erfindungsgemäß zu verwendende Naphtholactamfarbstoffe I mit der anhand der Naphtholactamfarbstoffe I-41 bis I-44 beispielhaft verdeutlichten Struktur und die Art ihrer Herstellung sind gleichfalls vom Stand der Technik her bekannt.

Erfindungemäß zu verwendende Naphtholactamfarbstoffe I mit der anhand der Naphtholactamfarbstoffe I-45 bis I-60 beispielhaft verdeutlichten Struktur sind dagegen neu. Sie werden daher kurz als erfindungsgemäße Naphtholactamfarbstoffe I bezeichnet. Ihre Herstellung erfolgt durch die Kondensation eines Naphtholactams der allgemeinen Formel IX,

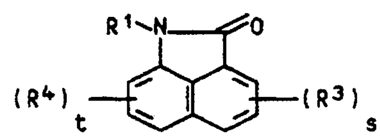

IX

worin die Indices und die Variablen die vorstehend erläuterte Bedeutung haben, mit geeigneten 1,3-Thiazolderivaten in der Gegenwart von $POCl_3$ und $ZnCl_2$. Hierbei kommen als 1,3-Thiazolderivate all die in Betracht, von denen sich die vorstehend genannten 1,3-Thiazolylreste ableiten, insbesondere aber die 4-Aryl-2-N,N-dialkylamino-, -2-N,N-dicycloalkylamino-, -2-N-alkyl-N-cycloalkylamino-, -2-N,N-diarylamino-, 2-N-alkyl-N-aryl-amino, -2-N-cycloalkyl-N-aryl-amino-, .-2-N,N-di(ω-aryl- alkyl)-amino-, -2-N-alkyl-N-(ω-arylalkyl)-amino-, -2-N-(ω-arylalkyl)-N-aryl-amino-, -2-N-(ω-arylalkyl)-N-cycloalkyl-amino-, -2-(azolidin-1-yl)-, -2-(azol-1′-yl)- und die 4-Aryl-2-(perhydroazin-1′-yl)-1,3-thiazole, von denen 4-Phenyl-2-N,N-diethylamino-1,3-thiazol ganz besonders bevorzugt wird.

Die Kondensation wird in Lösung durchgeführt. Hierzu verwendet man wasserfreie, inerte organische Lösungsmittel wie etwa 1,2-Dichlorethan. Vorteilhafterweise stellt man hierbei zunächst eine flüssige Mischung aus $POCl_3$, wasserfreiem Zinkchlorid und einem Naphtholactam IX her und dosiert zu dieser Mischung bei 50 bis 100°C, inbesondere 60 bis 90°C, die Lösung eines geeigneten 1,3-Thiazols in 1,2-Dichlorethan hinzu. Hiernach wird das resultierende Reaktionsgemisch eine gewisse Zeit, vorteilhaft sind 1 bis 10 Stunden, unter Ruhren auf Rückflußtemperatur erhitzt. Anschließend gießt man das heiße oder das kalte Reaktionsgemisch in heißes oder kaltes Wasser, destilliert hieraus das 1,2-Dichlorethan ab, und versetzt die resultierende wäßrige Phasé mit der hochkonzentrierten Lösung eines Salzes, wodurch der erfindungsgemäße Naphtholactamfarbstoff I als kristalliner Feststoff abgeschieden wird. Hiernach wird der erfindungsgemäße Naphtholactamfarbstoff I abgetrennt, ggf. gereinigt und anschließend getrocknet, wobei man die in der präparativen organischen Chemi üblichen und bekannten Trenn-, Reinigungs- und Trocknungsmethoden anwendet. Man kann indes die Kondensation auch ohne Lösungsmittel durchführen.

Die erfindungsgemäßen Naphtholactamfarbstoffe I werden mit besonderem Vorteil als Sensibilisatoren ($b_2$) in den erfindungsgemäßen elektrophotographischen Aufzeichnungsmaterialien verwendet. Überdies

eignen sie sich für die Herstellung von Aufzeichnungsschichten laseroptischer Datenplatten.

Beispiele für erfindungsgemäß zu verwendende Naphtholactamfarbstoffe I mit der anhand des Naphtholactamfarbstoffs I-62 beispielhaft verdeutlichten Struktur und ihre Herstellung sind aus der CA-A-1 023 188 bekannt. Hierin wird auch ihre Verwendung in silberhalogenidhaltigen Emulsionen beschrieben. Diese Emulsionen dienen der Herstellung direkt positiver photographischer Filme.

Beispiele für erfindungsgemäß zu verwendende Naphtholactamfarbstoffe I mit der anhand der Naphtholactamfarbstoffe I-63 bis I-68 beispielhaft verdeutlichten Struktur und ihre Herstellung sind aus der EP-A-0 224 261 bekannt. Dort wird auch ihre Verwendung für die Herstellung von Aufzeichnungsschichten laseroptischer Datenplatten beschrieben.

Beispiel für erfindungsgemäß zu verwendende Naphtholactamfarbstoffe I mit der anhand der Naphtholactamfarbstoffe I-69 bis I-97 beispielhaft verdeutlichten Struktur, ihre Herstellung und ihre Verwendung für die Herstellung von Aufzeichnungsschichten laseroptischer Datenplatten werden in der deutschen Patentanmeldung P 3608214.7 beschrieben.

Beispiele für erfindungsgemäß zu verwendende Naphtholactamfarbstoffe I mit der anhand der Naphtholactamfarbstoffe I-98 bis I-117 beispielhaft verdeutlichten Struktur, ihre Herstellung und ihre Verwendung für die Herstellung von Aufzeichnungsschichten laseroptischer Datenplatten werden in der deutschen Patentanmeldung P 3631843.4 beschrieben.

Beispiele für erfindungsgemäß zu verwendende Naphtholactamfarbstoffe I mit der anhand der Naphtholactamfarbstoffe I-118 bis I-120 beispielhaft verdeutlichten Struktur, ihre Herstellung und ihre Verwendung für die Herstellung von Aufzeichnungsschichten laseroptischer Datenplatten werden in der deutschen Patentanmeldung P 3738911.4 (O.Z. 0050/39584) beschrieben.

Der zweite wesentliche Bestandteil der neuen photoleitenden Schichten (B) der erfindungsgemäßen elektrophotographischen Aufzeichnungsmaterialien ist das Bindemittel ($b_1$).

Die Art der geeigneten Bindemittel ($b_1$) für die Schichten (B) richtet sich nach dem beabsichtigten Verwendungszweck der Aufzeichnungsmaterialien. Für den Kopiersektor eignen sich z.B. Celluloseether, Polyesterharze, Polyvinylchloride, Polycarbonate, Copolymerisate, wie Styrol-Maleinsäureanhydrid-Copolymerisate oder Vinylchlorid-Maleinsäureanhydrid-Copolymerisate, oder Mischungen solcher Bindemitteln ($b_1$). Bei ihrer Auswahl spielen ihre filmbildenden und elektrischen Eigenschaften, ihre Haftfestigkeit auf dem Trägermaterial und ihre Löslichkeitseigenschaften eine besondere Rolle. Insbesondere bei Aufzeichnungsmaterialien für die Herstellung elektrophotographischer Druckplatten, insbesondere bei denen für den Offsetdruck, sind solche Bindemittel ($b_1$) besonders geeignet, die in alkalischen, wäßrigen oder alkoholischen Lösungsmitteln löslich sind. Dies sind vor allem Bindemittel ($b_1$) mit alkalilöslich machenden Gruppen wie Anhydrid-, Carboxyl-, Sulfonsäure-, Phenol- oder Sulfonimid-Gruppen. Bevorzugt sind Bindemittel ($b_1$), insbesondere solche mit hohen Säurezahlen, die in basischen wäßrig-alkoholischen Entwicklerlösungsmitteln leicht löslich sind und ein mittleres Molekulargewicht (Gewichtsmittel), von 800 bis 150 000 und insbesondere 1 200 und 80 000 aufweisen. Geeignet sind z.B. Copolymerisate aus Methacrylsäure und Methacrylsäureestern, besonders Copolymerisate aus Styrol und Maleinsäureanhydrid und aus Styrol, Methacrylsäure und Methacrylsäureester, soweit sie die vorstehende Löslichkeitsbedingung aufweisen. Obwohl bekanntermaßen Bindemittel ($b_1$) mit freien Carboxylgruppen die Dunkelleitfähigkeit der elektrophotographischen Schichten in unerwünschter Weise erhöhen und dadurch zu schlechten Betonerungsergebnissen führen können, lassen sich solche Bindemittel leicht an die verwendeten Ladungstransportverbindungen oder Photoleiter ($b_3$) anpassen. So hat sich gezeigt, daß Copolymerisate aus Styrol, Maleinsäureanhydrid und Acryl- oder Methacrylsäure, die einen Anteil von einpolymerisiertem Maleinsäureanhydrid von 5 bis 50 Gew.% und einen Anteil von einpolymerierter Acryl- oder Methacrylsäure von 5 bis 35 und insbesondere 10 bis 30 Gew.% aufweisen, photoleitende Schichten (B) mit niedriger Dunkelleitfähigkeit ergeben. Sie weisen eine hervorragende Löslichkeit in Entwicklerlösungsmitteln aus 75 Gew.% Wasser, 23 Gew.% Isobutanol und 2 Gew.% Soda auf.

Der dritte wesentliche Bestandteil der neuen photoleitenden Schichten (B) der erfindungsgemäßen elektrophotographischen Aufzeichnungsmaterialien ist die Ladungsträger transportierende Verbindung oder der Photoleiter ($b_3$). Hierbei handelt es sich um die auf dem in Rede stehenden technischen Gebiet üblichen und bekannten niedermolekularen Oxazolderivate (DE-B-11 20 875), Oxdiazolderivate (DE-B-10 58 836), Triazolderivate (DE-B-10 60 260), Azomethine (US-A-3 041 165), Pyrazolinderivate (DE-B-10 60 714), Imidazolderivate (DE-B-11 06 599), Arylamine (DE-B-27 12 557), 1,3-Dithiolderivate (DE-B-33 38 204), Benzotriazolderivate (EP-A-0 131 292), Triazolylpyridinderivate (EP-A-0 150 419), Pyrazolotriazolderivate (EP-A-0 156 308), Triphenyltriazolderivate (EP-A-0 162 216) oder Hydrazonderivate (EP-A-0 001 599, DE-A-29 19 791 ≙ US-A4 367 273 und US-A-4 278 747, GB-A-2 088 074 oder DE-A-31 40 571) oder um die gleichfalls üblichen und bekannten oligomeren oder polymeren Photoleiter Poly(N-vinylcarbazol) oder Arylaminpolymere (EP-A-0 052 961).

Die neuen photoleitenden Schichten (B) enthalten einen oder mehrere dieser Photoleiter ($b_3$) in einer Menge von 40 bis 150, vorzugsweise 40 bis 130, vorteilhafterweise 50 bis 120 und insbesondere 60 bis 100 Gew.-Teile pro 100 Gew.-Teile Bindemittel ($b_1$).

Daruber hinaus kann die neue photoleitende Schicht (B), bezogen auf ihre Gesamtmenge, bis zu 30 Gew.%, vorzugsweise 25 Gew.%, vorteilhafterweise 20 Gew.% und insbesondere 15 Gew.% an Zusatzstoffen enthalten.

Als Zusatzstoffe kommen im wesentlichen nur solche in Betracht, welche die optische Transparenz der neuen photoleitenden Schicht (B) nicht beeinträchtigen. Dabei können die Zusatzstoffe die unterschiedlichsten Funktionen haben. Beispielsweise können Verlaufmittel wie Silikonöle, Netzmittel, insbesondere nichtionogene Substanzen, Weichmacher auf der Basis chlorierter Kohlenwasserstoffe oder auf der Basis von Phthalsäureestern, Haftvermittler, nicht molekulardispers einmischbare organische und anorganische Füllstoffe und Verstärkungsfüllstoffe, die aus der EP-A-0 131 215 bekannten Metallacetylacetonate und/oder die üblichen und bekannten Sensibilisatoren aus den Klassen der Triarylmethan-, Xanthen- oder Cyaninfarbstoffe zur Schicht (B) zusätzlich hinzugegeben werden. Darüber hinaus kann die neue photoleitende Schicht (B), sofern sie als photoleitende Doppelschicht ausgebildet ist, in der separaten Sensibilisatorschicht Ladungsträger erzeugende Pigmente aus den Klassen der Azo-, der Phthalocyanin-, der Isoindolin- und/oder der Perylenfarbstoffe enthalten. Diese Pigmente können indes auch als weitere zusätzliche separate Sensibilisatorschicht vorliegen. Darüber hinaus können diese Pigmente als einzige separate Sensibilisatorschicht der als Doppelschicht ausgebildeten neuen Schicht (B) vorhanden sein, dann allerdings muß die separate Schicht aus ($b_1$), ($b_3$) und ggf. ($b_4$) obligatorisch die erfindungsgemäß anzuwendenden Naphtholactamfarbstoffe I enthalten.

Demnach bestehen die neuen photoleitenden Schichten (B), bezogen auf ihre Gesamtmenge, aus

- 70 bis 100, vorzugsweise 75 bis 100, vorteilhafterweise 80 bis 100 und insbesondere 85 bis 100 Gew.% eines sensibilisierten photoleitenden Gemischs aus den Komponenten ($b_1$), ($b_2$) und ($b_3$)

und aus

- 0 bis 30, vorzugsweise 0 bis 25, vorteilhafterweise 0 bis 20 und insbesondere 0 bis 15 Gew.% an Zusatzstoffen ($b_4$).

Hierbei besteht das sensibilisierte photoleitende Gemisch aus

- 100 Gew.-Teilen eines Bindemittels ($b_1$) oder mehrerer Bindemittel ($b_1$),
- 0,05 bis 20, vorzugsweise 0,1 bis 18, vorteilhafterweise 0,5 bis 15 und insbesondere 1,0 bis 10 Gew.-Teilen eines erfindungsgemäß zu verwendenden Naphtholactamfarbstoffs I oder mehrerer erfindungsgemäß zu verwendender Naphtholactamfarbstoffe I (= Sensibilisator $b_2$) und 40 bis 150, vorzugsweise 40 bis 130, vorteilhafterweise 50 bis 120 und insbesondere 60 bis 100 Gew.-Teilen eines Photoleiters ($b_3$) oder mehrer Photoleiter ($b_3$).

Sofern die neue photoleitende Schicht (B) nicht als Doppelschicht ausgebildet ist, liegt ihre Dicke bei 0,5 bis 40, vorzugsweise 0,8 bis 25, vorteilhafterweise 1 bis 20 und insbesondere 1,5 bis 15 µm.

Sofern die neue photoleitende Schicht (B) als Doppelschicht ausgelegt ist, liegt die Dicke der die Naphtholactamfarbstoffe I enthaltenden Sensibilisatorschicht, wie vorstehend aufgeführt, bei 0,005 bis 5, vorzugsweise 0,05 bis 3, vorteilhafterweise 0,08 bis 2 und insbesondere 0,1 bis 0,9 µm, und die Gesamtdicke der Doppelschicht liegt bei 2 bis 30, vorzugsweise 3 bis 25, vorteilhafterweise 3,5 bis 20 und insbesondere 5 bis 15 µm.

Neben der neuen photoleitenden Schicht (B) ist der elektrisch leitende Träger (A) der weitere wesentliche Bestandteil der erfindungsgemäßen, mehrschichtigen, elektrophotographischen Aufzeichnungsmaterialien. Hierfür sind grundsätzlich alle elektrisch leitfähigen Trägermaterialien verwendbar, sofern sie zu dimensionsstabilen dünnen Platten oder Folien verarbeitet werden können. Je nach Verwendungszweck der erfindungsgemäßen Aufzeichnungsmaterialien werden Aluminium-, Zink-, Magnesium-, Kupfer-, Stahl- oder Mehrmetallplatten, Polymerfolien mit metallisierter Oberfläche wie aluminiumbedampfte Polyethylenterephthalatfolien oder elektrisch leitende Spezialpapiere verwendet. Hierbei sind insbesondere die rohen oder vorbehandelten Aluminiumbleche oder -folien bevorzugt, wie sie für Offsetdruckplatten typisch sind. Dabei umfaßt die Vorbehandlung der Aluminiumbleche oder - folien eine chemische, mechanische oder elektrochemische Aufrauhung der Oberfläche und/oder eine anodische Oxidation unter Bildung einer porösen Aluminiumoxidschicht, ggf. gefolgt von einer Versiegelung der betreffenden Oxidschicht. Im allgemeinen sind die Träger (A) - je nach Verwendungszweck der Aufzeichnungsmaterialien - 50 µm bis 1,5 mm, insbesondere 80 µm bis 0,6 mm dick. Darüber hinaus können die erfindungsgemäßen, mehrschichtigen, elektrophotographischen Aufzeichnungsmaterialien mindestens eine weitere Schicht enthalten, welche der Funktion der Aufzeichnungsmaterialien dienlich ist. Bei dieser oder diesen weiteren Schicht(en) kann es sich um eine der vorstehend beschriebenen, bekannten, zusätzlichen Sensibilisatorschichten handeln, welche zwischen dem Träger (A) und der neuen photoleitenden Schicht (B) angeordnet sind. Desweiteren

können die aus der DE-B-25 04 545 bekannten Schichten aus z.B. teilchenförmigen Titandioxid, Zinkoxid, α-Eisen(III)oxid, Bariumtitanat, Aliminiumoxid oder Ceroxid verwendet werden. Außerdem kommen Schichten aus anorganischen Photoleitern wie Selen oder Cadiumsulfid als zusätzliche Bestandteile der Aufzeichnungsmaterialien in Betracht. Darüber hinaus können die aus der EP-A-0 046 960 bekannten Deckschichten aus Siliziummonoxid, Magnesiumfluorid oder Calciumfluorid mitverwendet werden.

Die Herstellung der erfindungsgemäßen, mehrschichtigen, elektrophotographischen Aufzeichnungsmaterialen weist keine methodischen Besonderheiten auf, sondern die Herstellung der neuen photoleitenden Schicht (B) erfolgt nach den üblichen und bekannten Methoden der Herstellung dünner organischer Schichten, und die Herstellung der elektrisch leitenden Träger (A) erfolgt nach den üblichen und bekannten Methoden der Herstellung dünner Metallbleche oder -folien und metallbedampfter Polymerfolien.

Bei der Herstellung der photoleitenden Schichten (B) werden in einer vorteilhaften Verfahrensweise die Komponenten der neuen photoleitenden Schichten (B) in geeigneten Lösungsmitteln aufgelöst, und die resultierenden Lösungen werden auf die Träger (A) so ausgegossen, daß nach dem Trocknen der Naßschichten die Schichten (B) in der gewünschten gleichmäßigen Dicke resultieren. Sofern die neuen photoleitenden Schichten (B) als Doppelschichten ausgelegt werden sollen, werden zunächst die die Naphtholactamfarbstoffe I enthaltenden Sensibilisatorschichten in der gewünschten Dicke durch Gießen aus Lösung und Trocknen der Naßschichten auf der Oberfläche der Träger (A) erzeugt. Hiernach werden diese Sensibilisatorschichten mit Schichten aus den Komponenten ($b_1$), ($b_3$) und ggf. ($b_4$) durch Gießen aus Lösung und Trocknen der Naßschichten bedeckt, wobei darauf geachtet wird, daß die hierbei verwendeten Lösungsmittel die vorhandenen Sensibilisatorschichten nicht beschädigen. Die Herstellung der betreffenden Gießlösungen erfolgt mit Hilfe der üblichen und bekannten Misch- und Lösungstechniken.

Sofern die erfindungsgemäßen elektrophotographischen Aufzeichnungsmaterialien außer der neuen photoleitenden Schicht (B) weitere Schichten enthalten sollen, so werden diese mit Hilfe von Methoden erzeugt, welche für die Herstellung der jeweiligen Schichten üblich, bekannt und charakteristisch sind. Selbstverständlich richtet sich hierbei die Reihenfolge der Durchführung der einzelnen Verfahrensschritte nach dem gewünschten Aufbau der Aufzeichnungsmaterialien, bzw. ergibt sie sich hieraus zwingend.

Das erfindungsgemäße, mehrschichtige, elektrophotographische Aufzeichnungsmaterial weist zahlreiche hervorragende Eigenschaften auf, welche nach Art und Anzahl mittels bekannter Aufzeichnungsmaterialien bislang zugleich nicht realisiert werden konnten. Diese bisher nicht erzielbare Kombination hervorragender Eigenschaften bewirkt einen besonderen unerwarteten technischen Effekt, welcher sich nicht nur an den erfindungsgemäßen Aufzeichnungsmaterialien selbst, sondern gerade auch bei den hieraus hergestellten Folgeprodukten - den Trommeln in Photokopiergeräten, den elektrophotographischen Offsetdruckplatten und den Photoresists - und nicht zuletzt bei den hiermit hergestellten Phatokopien, Druckerzeugnissen und Leiterplatten vorteilhaft bemerkbar macht.

So weist das erfindungsgemäße Aufzeichnungsmaterial eine sehr niedrige Dunkelleitfähigkeit, verbunden mit einer hohen elektrostatischen Aufladbarkeit, einer besonders hohen Empfindlichkeit gegenüber aktinischem Licht und vorzüglichen elektrokinetischen Eigenschaften auf. Dieses Eigenschaftsprofil bewirkt eine hervorragende, äußerst detailgetreue, kontrastreiche Wiedergabe von Bildvorlagen in kürzerer Zeit als es bisher möglich war, was insbesondere für die betriebliche Praxis eines reprographischen Unternehmens ein besonders bedeutsamer Vorteil ist.

Überdies neigt das bildmäßig belichtete, erfindungsgemäße Aufzeichnungsmaterial überhaupt nicht zum Tonen in den Nichtbildbereichen, was die kontrastreiche Wiedergabe kritischer feiner Bildelemente in Bildvorlagen, wie etwa die Wiedergabe feiner Rasterpunkte in lichten Tonwertbereichen, erheblich verbessert oder gar erst ermöglicht. Trotz seiner hohen Empfindlichkeit gegenüber aktinischem Licht ist das erfindungsgemäße Aufzeichnungsmaterial einfach handhabbar, so daß hierfür besondere Vorsichtsmaßnahmen nicht zu ergreifen sind. Wegen dieser hohen Empfindlichkeit gegenüber aktinischem Licht und dem hierdurch induzierten, besonders raschen Photoabfall und weil hierbei auch im Nanosekundenbereich das Gesetz

$$I \cdot t = \text{konstant}$$

(I = Lichtintensität; t = Zeit)

Gültigkeit hat, kann das erfindungsgemäße Aufzeichnungsmaterial in vollem Umfang die Vorteile der modernen Belichtungsmethoden ausschöpfen. Es eignet sich daher nicht nur für die übliche bildmäßige Belichtung mittels Glühlampen und Leuchtröhren, welche Licht im ultravioletten und/oder sichtbaren Wellenlängenbereich ausstrahlen, sondern auch für die bildmäßige Belichtung mittels impulsmodulierter oder analog modulierter Laserstrahlen, welche über das Aufzeichnungsmaterial hinweggeführt werden. Somit können für die bildmäßige Belichtung die modernen, computergesteuerten Laserbelichtungsgeräte

verwendet werden, wobei diese aufgrund der vorteilhaften Eigenschaften des Aufzeichnungsmaterials ganz besonders hervorragende Abbildungsergebnisse liefern. Hierbei können nicht nur Belichtungsgeräte, welche mit Laserlicht im sichtbaren Wellenlängenbereich arbeiten, verwendet werden, sondern auch solche, die Laserlicht im infraroten Wellenbereich verwenden. Hierdurch ergibt sich wegen der besonderen Eigenschaften des Aufzeichnungsmaterials unmittelbar der weitere Vorteil, daß nämlich für die Belichtung mit rotem oder infrarotem Laserlicht die bekanntermaßen kleinen, preiswerten und leicht herzustellenden Halbleiterlaser aus beispielsweise GaAlAs ode GaAlInP verwendet werden können, was das Belichtungsverfahren als solches insgesamt erheblich rationeller, variabler und wirtschaftlicher gestaltet.

Das erfindungsgemäße Aufzeichnungsmaterial weist deutliche Vorteile bei der Verwendung im Photokopiersektor auf. So läßt es sich in einfacher Weise auf die in Photokopiergeräten üblicherweise vorhandenen Trommeln auftragen und ermöglicht in dieser Form die Herstellung exzellenter Photokopien auch von vergilbten Vorlagen in hoher Auflage und in sehr kurzer Taktzeit. Außerdem lassen sich diese Trommeln nach ihrer vorteilhaft langen Lebensdauer in einfacher Weise umweltschonend entsorgen. Die hiermit hergestellten Photokopien sind besonders kontrastreich, auch in den problematischen Bildelementen detailgetreu und in den Nichtbildbereichen ungetonert.

Das erfindungsgemäße Aufzeichnungsmaterial weist auch bei der Verwendung als Photoresist deutliche Vorteile auf. Zu diesem Anwendungszweck wird es auf Träger (A) aufgetragen, welch üblicherweise für die Herstellung von Leiterplatten verwendet werden. Hiernach wird es mit aktinischem Licht bildmäßig belichtet, wobei auch hier die vorstehend genannten Vorteile moderner Belichtungsmethoden voll zum Tragen kommen. Hiernach wird auf dem belichteten Aufzeichnungsmaterial in üblicher und bekannter Weise ein Tonerbild erzeugt und durch Erhitzen fixiert, wonach man die unbetonerten Nichtbildbereiche mit geeigneten Entwicklungslösungsmitteln entfernt. In dieser Weise erhält man ein hervorragendes detailgetreues Photoresistmuster, welches frei von Lochfraß, Unterwaschungen der Reliefflanken und Kantenausbrüchen ist, hervorragend auf dem Träger (A) haftet und welches gegenüber den üblicherweise verwendeten Ätzchemikalien und Galvanikbädern sehr gut beständig ist. Mit Hilfe dieses Verfahrens werden - weitgehend ohne Ausschuß - fehlerfreie Leiterplatten erhalten, deren Lebensdauer vorteilhaft lang ist.

Besonders deutliche Vorteile weist das erfindungsgemäße Aufzeichnungsmaterial bei der Verwendung für die Herstellung von elektrophotographischen Offsetdruckplatten auf, welche in an sich üblicher und bekannter Weise durch

1. elektrostatische Aufladung des erfindungsgemäßen Aufzeichnungsmaterials mittels einer Hochspannungscorona,

2. eine sich direkt hieran anschließende bildmäßige Belichtung des Aufzeichnungsmaterials mit aktinischem Licht, wodurch ein latentes elektrostatisches Ladungsbild erzeugt wird,

3. die Entwicklung des latenten elektrostatischen Ladungsbildes mittels eines Trocken- oder Flüssigtoners, gefolgt von

4. dem Fixieren des Tonerbildes durch Erhitzen und durch

5. Entfernen der unbetonerten Nichtbildbereiche der neuen photoleitenden Schicht (B) mittels einer geeigneten Entwicklerflüssigkeit, wodurch die hydrophile Oberfläche des Träger (A) freigelegt wird.

erfolgt.

Hierbei kann das erfindungsgemäße Aufzeichnungsmaterial mit einer besonders hohen Spannung beaufschlagt und binnen kurzer Belichtungszeit bildmäßig belichtet werden, wobei die Vorteile der modernen Belichtungsmethoden, insbesondere die Belichtung mit rotem oder infrarotem Laserlicht, in vollem Umfang ausgeschöpft werden können. Hierdurch resultieren rasch und zuverlässig völlig detailgetreue, kontrastreiche, latente Ladungsbilder, welche Tonerbilder liefern, die in den Nichtbildbereichen völlig unbetonert sind. Diese reprographische Genauigkeit ermöglicht überdies die Verwendung von Tonern, welche man ansonsten nicht in Betracht gezogen hätte, wodurch das gesamte Herstellverfahren breiter variiert und besser an spezielle technische Probleme angepaßt werden kann. Nach dem Fixieren des Tonerbildes erfolgt das Entfernen der Nichtbildbereiche problemlos und ohne nachträgliche Beschädigung des Tonerbildes. Hierbei können eine Vielzahl unterschiedlicher Entwicklerlösungsmittel verwendet werden. Die Auswahl der Entwicklerlösungsmittel richtet sich dabei in erster Linie nach der stofflichen Zusammensetzung der ursprünglichen photoleitenden Schicht (B), wobei die Löslichkeit oder Quellbarkeit des darin enthaltenen Bindemittels ($b_1$) der wesentliche Parameter ist. Bedingt durch die nun mögliche verbesserte gegenseitige Anpassung der Tonermaterialien und der Materialien der ursprünglichen Schicht (B) können Entwicklerlösungsmittel mit erheblich stärkerem Lösevermögen und/oder Auswaschverfahren, welche mit höherem Lösungsmittel- oder Bürstendruck arbeiten, angewendet werden. Hierdurch resultiert eine kürzere Entwicklungszeit, ohne daß dabei die Bildbereiche beschädigt werden.

Die hiernach erhaltene elektrophotographische Offsetdruckplatte gibt auch diejenigen Bildelemente, welche sich ansonsten nur schwer zuverlässig reproduzieren lassen, in bester Qualität wieder. Sie kann in

bekannter Weise für den Offsetdruck, z.B. mittels einer Hydrophilierung und Gümmierung, weiter vorbereitet werden, um die ohnedies vorzügliche Qualität der elektrophotographischen Offsetdruckplatte noch weiter zusteigern.

Beim Drucken auf einem Offsetdruckwerk mit Offsetdruckfarben vom Typ "Öl in Wasser" nehmen die druckenden Bereiche der Offsetdruckplatte die öligen Farben hervorragend an, wogegen ihre entschichteten Bereiche hervorragend wasserführend sind. Hierdurch resultiert ein ausgezeichneter Kontrast und ein äußerst präziser Druck, was insgesamt zu exzellenten Druckerzeugnissen führt. Da die Offsetdruckplatte unter den Druckbedingungen eine vorteilhaft lange Lebensdauer hat, wird überdies eine hohe Auflage erzielt.

## Beispiele und Vergleichsversuche

Bei den folgenden Beispielen und Vergleichsversuchen wurden die anwendungstechnischen Eigenschaften nach dem xerographischen Verfahren (Carlson-Prozess) bestimmt. Hierzu wurden sowohl erfindungsgemäße (Beispiele 1 bis 29) als auch bekannte (Vergleichsversuche V1 bis V10) elektrophotographische Aufzeichnungsmaterial hergestellt, in üblicher und bekannter Weise mittels einer Gleichspannungscorona von + 8,5 kV oder -8,5kV aus einem Abstand von 1 cm binnen 20 Sekunden gleichmäßig auf ein Oberflächenpotential von bis zu +1000 oder -1000 V aufgeladen und hiernach vollflächig oder bildmäßig belichtet. Selbstverständlich wurden hierbei die einzelnen Verfahrensschritte unter jeweils exakt vergleichbaren Bedingungen durchgeführt, so daß der gemessene Spannungsabfall, welcher durch die jeweils eine Sekunde während vollfächige Belichtung induziert wurde (= Photoabfall PHA in %, usprünglicher Wert = 100 %), eindeutig die Vorteilhaftigkeit der erfindungsgemäßen Aufzeichnungsmaterialien belegte.

## Beispiele 1 und 2 und Vergleichsversuch V1

Allgemeine Versuchsvorschrift:

Jeweils 0,544 g eines Copolymerisats, welches 52 Gew.% Styrol, 28 Gew.% Methacrylsäure und 20 Gew.% Maleinsäureanhydrid einpolymerisiert enthielt (Bindemittel $b_1$), wurden in jeweils 9 g Tetrahydrofuran innerhalb 30 Minuten aufgelöst. Zu den resultierenden Copolymerisatlösungen gab man jeweils 0,5 g 2,5-Bis-(4′-diethylaminophen-1′-yl)-1,3,4-oxidiazol (Photoleiter $b_3$) und rührte weitere 15 Minuten nach.

Parallel hierzu wurden Sensibilisatorlösungen aus jeweils 0,006 g eines erfindungsgemäß zu verwendenden Naphtholactamfarbstoffs I (Sensibilisator $b_2$, Beispiele 1 und 2) oder 0,006 g Rhodamin B (Vergleichsversuch V1) und jeweils 1 g Ethylenglykolmonoethylether hergestellt.

Hiernach wurde jeweils eine Sensibilisatorlösung mit jeweils einer Bindemittel/Photoleiter-Lösung vereinigt. Die vereinigten Lösungen wurden auf 0,30 mm dicke, elektrochemisch aufgerauhte und anodisch oxidierte Aluminiumbleche (Träger A) ausgegossen und getrocknet, so daß 5 µm dicke, neue photoleitende Schichten (B) (Beispiele 1 und 2) und bekannte photoleitende Schichten (Vergleichsversuch V1) resultierten.

Diese Schichten wurden negativ aufgeladen und hiernach mittels einer Xenonhochdrucklampe belichtet, wobei mittels eines üblichen und bekannten, sogenannten "high pass filter" der Firma Spindler und Hoyer der kurzwellige sichtbare Spektralbereich ausgefiltert wurde, so daß hierbei lediglich der spektrale Bereich oberhalb $\lambda$ = 590 nm verwendet wurde. Der hieraus resultiertende Photoabfall wurde in bekannter Weise induktiv gemessen.

Die Tabelle 1 gibt Auskunft über die hierbei verwendeten Sensibilisatoren ($b_2$) und faßt die ermittelten Meßergebnisse zusammen.

Tabelle 1

| Die sensibilisierende Wirkung erfindungsgemäß zu verwendender Naphtholactamfarbstoffe I im Vergleich mit der Wirkung von Rhodamin B | | |
|---|---|---|
| | Sensibilisator | Photoabfall (PHA) (%) |
| Bsp. 1 | I-16 | 94 |
| Bsp. 2 | I-34 | 94 |
| Vergl. V1 | Rhodamin B | 84 |

Der Vergleich der Versuchsergebnisse zeigt, daß die sensibilisierende Wirkung der erfindungsgemäß zu verwendenden Naphtholactamfarbstoffe I oberhalb $\lambda$ = 590 nm diejenige des bekanntermaßen im sichtbaren und nahen UV-Bereich sehr empfindlichen Rhodamin B übertrifft, was die Vorteilhaftigkeit der Naphtholactamfarbstoffe I bei der Sensibilisierung im roten und infrarotem Spektralbereich untermauert.

Beispiel 3

Die allgemeine Versuchsvorschrift der Beispiele 1 und 2 wurde nachgearbeitet, nur daß anstelle von 0,006 g Sensibilisator ($b_2$ ein Gemisch aus

- 0,01 g des Naphtholactamfarbstoffs I-16 und
- 0,006 g Rhodamin B.

angewandt wurde. Das resultierende erfindungsgemäße Aufzeichnungsmaterial wies einen Photoabfall von 96 % auf.

Beispiel 4 und Vergleichsversuch V1

Beispiel 1 und Vergleichsversuch V1 wurden wiederholt, mit dem Unterschied, daß sowohl das erfindungsgemäße als auch das bekannte Aufzeichnungsmaterial nach dem Aufladen in dem Laser-Recorder der Firma Hope mit Hilfe eines Helium-Neon-Lasers (Wellenlänge $\lambda$ der Hauptemission = 633 nm) bildmäßig belichtet wurden. Hierbei lag die Schreibgeschwindigkeit bei einer Bildpunktfolgefrequenz von 3,8 MHz bei 193 $m \cdot s^{-1}$, was bei einem Plattenvortrieb in 27 $\mu$m Schritten 42 $cm^2 \cdot s^{-1}$ an belichteter Fläche entsprach.

Nach der bildmäßigen Belichtung wurde das erfindungsgemäße und das bekannte Aufzeichnungsmaterial betonert, wobei man als Toner in einem Thermoplasten dispergierten Ruß verwendete. Nach dem Tonen wurden die beiden resultierenden Tonerbilder durch Erhitzen auf 100 °C fixiert.

Bereits hierbei wies das bekannte Aufzeichnungsmaterial Nachteile auf, indem seine Nichtbildbereiche schwach aber dennoch merklich betonert waren; wogegen das erfindungsgemäße Aufzeichnungsmaterial in den Nichtbildbereichen völlig tonerfrei war.

Hiernach wurden die beiden Aufzeichnungsmaterialien durch Überwischen mit einer Entwicklerflüssigkeit aus 0,5 Gew.% Natriumcarbonat, 0,3 Gew.% Wasserglas, 25 Gew.% n-Propanol und 74,2 Gew.% Wasser entwickelt, wodurch in den Nichtbildbereichen die Oberfläche der Träger (A) freigelegt wurde. In dieser Weise wurde sowohl bei dem erfindungsgemäßen als auch dem bekannten Aufzeichnungsmaterial die für Offsetdruckplatten typische Differenzierung in hydrophile und oleophile Bereiche erzielt, wobei die freigelegte Oberfläche der Träger (A) die hydrophilen Bereiche bildete.

Hiernach wurden die beiden Offsetdruckplatten mit Waser nachgespült, und es wurde die Hydrophilie der freigelegten Trägeroberfläche durch Überwischen mit verdünnter Phosphorsäure weiter erhöht.

Nach dem Einfärben mit einer Offsetdruckfarbe vom Typ "Öl in Wasser" wurde mit beiden Offsetdruckplatten in einem Offsetdruckwerk gedruckt.

Hierbei lieferte die aus dem erfindungsgemäßen Aufzeichnungsmaterial hergestellte Offsetdruckplatte (Beispiel 4) in hoher Auflage exzellente, völlig vorlagengetreue Druckerzeugnisse, die höchsten Qualitätsansprüchen genügten, wogegen die bekannte Offsetdruckplatte nur Druckerzeugnisse mäßiger Qualität liefern konnte.

Dies belegt, daß mit Hilfe des erfindungsgemäßen elektrophotographischen Aufzeichnungsmaterials die Vorteile moderner Belichtungsmethoden in vollem Umfang nutzbar gemacht werden können.

Beispiel 5 und Vergleichsversuch V3

Es wurden zwei Lösungen aus jeweils 1 g Poly(N-vinylcarbazol) in jeweils 8 g Tetrahydrofuran hergestellt.

Zu einer dieser Lösungen wurde eine Lösung von 0,02 g des Naphtholactamfarbstoffs I-16 in 1 g Ethylenglykolmonoethylether hinzugegeben (Beispiel 5); der anderen Lösung wurde die entsprechende Rhodamin B - Lösung zugesetzt (Vergleichsversuch V3).

Aus den beiden resultierenden Lösungen wurden gemäß der bei den Beispielen 1 und 2 angegebenen allgemeinen Versuchsvorschrift ein erfindungsgemäßes und ein bekanntes Aufzeichnungsmaterial durch Gießen aus Lösung hergestellt, wobei auch hier die vorstehend erwähnten Aluminiumbleche Verwendung fanden.

Beide Aufzeichnungsmaterialien wurden sowohl positiv als auch negativ aufgeladen und mit einer Xenonhochdrucklampe mit Licht der Wellenlänge $\lambda \geq 590$ nm belichtet, wonach man den hierdurch resultierenden Photoabfall (PHA) maß.

Im Falle des positiv aufgeladenen, erfindungsgemäßen Aufzeichnungsmaterials war dieser 79,3 %, im Falle des negativ aufgeladenen 73,6 % (Beispiel 5).

Die entsprechenden Werte des bekannten Aufzeichnungsmaterials waren 60.1 % und 51,5 % (Vergleichsversuch V3), was die Überlegenheit des erfindungsgemäßen Aufzeichnungsmaterials erneut dokumentiert.

Beispiel 6 und Vergleichsversuch V4

Es wurden zwei Lösungen aus jeweils 0,6 g Polycarbonat (®Makrolon 2800 der Bayer AG), 0,4 g 2,5-Bis-(4′-diethylamino-phen-1′-yl)-1,3,4-oxidiazol und 8 g Tetrahydrofuran hergestellt.

Beide Lösungen wurden, wie bei Beispiel 5 und Vergleichsversuch V3 beschrieben, zu einem erfindungsgemäßen (Beispiel 6) und einem bekannten Aufzeichnungsmaterial (Vergleichsversuch V4) verarbeitet. Aufzeichnungsmaterialien dieser Art sind vor allem für den Photokopiersektor geeignet.

Die beiden Aufzeichnungsmaterialien wurden, wie bei Beispiel 5 und Vergleichsversuch V4 angegeben, getestet, wobei man im Falle des Beispiels 6 einen Photoabfall von 59,7 % (nach positiver Aufladung) und von 56,4 % (nach negativer Aufladung) und im Falle des Vergleichsversuchs V4 einen solchen von 33,4 % (nach positiver Aufladung) und von 39,4 % (nach negativer Aufladung) maß, was die Überlegenheit des erfindungsgemäßen Aufzeichnungsmaterial weiter untermauert.

Beispiele 7 bis 10 und Vergleichsversuche V5 bis V8

Nach der bei Beispiel 6 und dem Vergleichsversuch V4 angegebenen Versuchsvorschrift wurden vier erfindungsgemäße (Beispiel 7 bis 10) und vier bekannte (Vergleichsversuche V5 bis V8) elektrophotographische Aufzeichnungsmaterialien hergestellt und getestet, wobei hier andere Photoleiter ($b_3$) zur Anwendung kamen:

Für Beispiel 7 und Vergleichsversuch V5 wurde

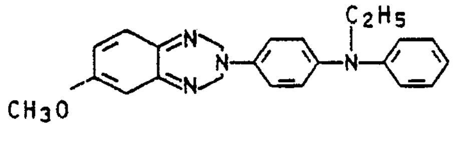

[= 2-(4′-N-Ethyl-N-phenylamino-phen-1′-yl)-5-methoxi-benzotriazol], für Beispiel 8 und Vergleichsversuch V6 wurde

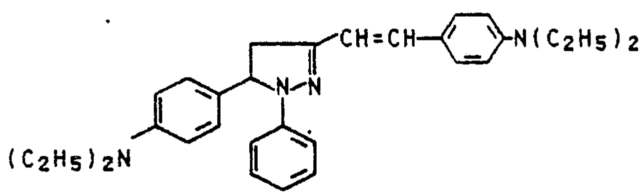

[= 1-Phenyl-3-(4′-N,N-diethylamino-$\beta$-styryl)-5-(4′-N,N-diethylamino-phen-1′-yl)-$\Delta^2$-pyrazolin], für Beispiel 9 und Vergleichsversuch V7 wurde

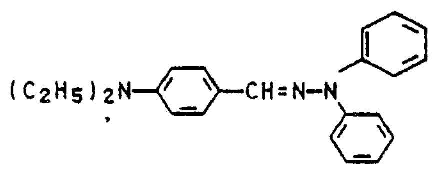

[= 4-N,N-Diethylaminobenzaldehyd-diphenylhydrazon] und für Beispiel 10 und Vergleichsversuch V8 wurde

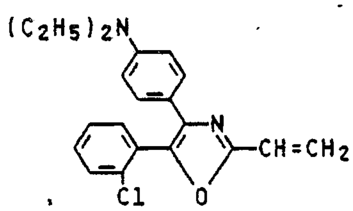

[= 2-Vinyl-4-(4′-N,N-diethylamino-phen-1′-yl)-5-(2′-chlor-phen-1′-yl)-1,3-oxazol] verwendet.

Die in der Tabelle 2 zusammengefaßten Versuchsergebnisse dokumentieren erneut die überlegene Wirkung der Naphtholactamfarbstoffe I.

Tabelle 2

| Die sensibilisierende Wirkung des erfindungsgemäß zu verwendenden Naphtholactamfarbstoffs I-16 in Ggw. unterschiedlicher Photoleiter ($b_3$) und der Vergleich mit Rhodamin B | | |
|---|---|---|
| Beispiele und Vergleichsversuche | Photoabfall (PHA) (%) | |
| | nach positiver Aufladung | nach negativer Aufladung |
| Bsp. 7 | 38,5 | 41,6 |
| Vgl. Vers. V5 | 10,8 | 15,2 |
| Bsp. 8 | 69,0 | 85,2 |
| Vgl. Vers. V6 | 22,7 | 50,3 |
| Bsp. 9 | 56,9 | 70,0 |
| Vgl. Vers. V7 | 28,2 | 60,2 |
| Bsp. 10 | 48,5 | 51,8 |
| Vgl. Vers. V8 | 19,3 | 21,1 |

Beispiele 11 bis 24

Beispiele 1 und 2 wurden wiederholt, nur daß anstelle der erfindungsgemäß zu verwendenden Naphtholactamfarbstoffe I-16 und I-34 die Naphtholactamfarbstoffe I-48 (Beispiel 11), I-57 (Beispiel 12), I-60 (Beispiel 13), I-71 (Beispiel 14), I-77 (Beispiel 15), I-85 (Beispiel 16), I-96 (Beispiel 17), I-97 (Beispiel 18), I-98 (Beispiel 19), I-99 (Beispiel 20), I-102 (Beispiel 21), I-103 (Beispiel 22), I-107 (Beispiel 23) und I-115 (Beispiel 24) verwendet wurden. In dieser Weise wurde die sensibilisierende Wirkung sowohl der erfindungsgemäß zu verwendenden Naphtholactamfarbstoffe I (Beispiele 14 bis 24) als auch der als solche neuen, erfindungsgemäßen Naphtholactamfarbstoffe I (Beispiele 11 bis 13) bie der Anwendung roten und infraroten Lichts getestet.

Die Tabelle 3 gibt eine Überblick über die Absorptionsmaxima ($\lambda_{max}$) der betreffenden Naphtholactamfarbstoffe I und über den durch sie hervorgerufenen Photoabfall (PHA) in den erfindungsgemäßen Aufzeichnungsmaterialien nach der negativen Aufladung.

Tabelle 3

| Die sensibilisierende Wirkung erfindungsgemäß zu verwendender und erfindungsgemäßer Naphtholactamfarbstoffe I bei der Belichtung mit rotem und infrarotem Licht | | | |
|---|---|---|---|
| Beispiel | Naphtholactamfarbstoff I | $\lambda_{max}$ (nm) | Photoabfall (PHA) (%) |
| 11 | I-48 | 598 | 93,3 |
| 12 | I-57 | 622 | 89,3 |
| 13 | I-60 | 626 | 85,0 |
| 14 | I-71 | 740, 840 | 85,1 |
| 15 | I-77 | 690, 765 | 73,2 |
| 16 | I-85 | 750, 860 | 79,6 |
| 17 | I-96 | 703, 770 | 78,6 |
| 18 | I-97 | 792, 878 | 83,5 |
| 19 | I-98 | 770, 850 | 31,5 |
| 20 | I-99 | 800, 890 | 25,6 |
| 21 | I-102 | 780, 875 | 30,5 |
| 22 | I-103 | 790, 890 | 23,3 |
| 23 | I-107 | 780, 875 | 21,5 |
| 24 | I-115 | 800, 840 | 14,1 |

Die erhaltenen Meßergebnisse zeigen, daß die Naphtholactamfarbstoffe I im infraroten Wellenlängenbereich eine z.T. vorzügliche Sensibilisatorwirkung aufweisen. Hierbei überrascht der Befund, daß zwischen der Sensibilisatorwirkung und dem Absorptionsmaximum ($\lambda_{max}$) eines betreffenden Naphtholactamfarbstoffs I sicherlich ein Zusammenhang besteht, daß indes dieser nicht alleine ausschlaggebend für eine vorzügliche Sensibilisatorwirkung ist. Offensichtlich spielen hierfür noch weitere, bislang unaufgeklärte Effekte eine wichtige Rolle, so daß die Auswahl der Naphtholactamfarbstoffe I für diesen Verwendungszweck nicht ohneweiteres anhand ihres z.T. bekannten physikalischen Eigenschaftsprofils getroffen werden kann.

Beispiele 25 bis 27

Die Beispiele 11 bis 13 wurden wiederholt, nur daß bei der Belichtung mit der Xenonhochdrucklampe der "high pass filter" zwischen der Lichtquelle und den erfindungsgemäßen Aufzeichnungsmaterialien durch einen üblichen und bekannten, sogenannten "Neutralfilter" mit der optischen Dichte OD = 1 ersetzt wurde. Hierbei wurden in der Tabelle 4 angegebenen Werte für den Photoabfall (PHA) gemessen.

Tabelle 4

| Die sensibilisierende Wirkung erfindungsgemäßer Naphtholactamfarbstoffe I in erfindungsgemäßen Aufzeichnungsmaterialien | | |
|---|---|---|
| Beispiel | Naphtholactamfarbstoffe I | Photoabfall (PHA) (%) |
| 25 | I-48 | 71,8 |
| 26 | I-57 | 60,2 |
| 27 | I-60 | 50,8 |

Beispiele 28 und 29 und Vergleichsversuch V9

Beispiel 4 wurde einmal unter Verwendung des Naphtholactamfarbstoffs I-71 (Beispiel 28) und ein anderes Mal unter Verwendung des Naphtholactamfarbstoffs I-97 (Beispiel 29) wiederholt, wobei in beiden Fällen anstelle des Helium-Neon-Lasers des Beispiels 4 ein GaAlAs-Halbleiterlaser für die bildmäßige Belichtung der erfindungsgemäßen Aufzeichnungsmaterialien verwendet wurde.

Die solchermaßen hergestellten Offsetdruckplatten weisen dieselben vorteilhaften Eigenschaften auf, wie sie in Beispiel 4 angegeben sind.

Es war nicht möglich, das bei den Beispielen 28 und 29 angewandte Verfahren zur Herstellung von Offsetdruckplatten auf das bekannte, Rhodamin B enthaltende Aufzeichnungsmaterial zu übertragen (Vergleichsversuch V9).

Beispiel 30

Die Herstellung des erfindungsgemäßen Naphtholactamfarbstoffs I-48; Versuchsvorschrift:

0,085 Mol N-Ethylnaphtholactam (= allgemeine Formel VIII mit $R^1$ = Ethyl) wurden in 60 g $POCl_3$ bei 40 bis 50 °C gelöst. Zur resultierenden Lösung wurden bei Raumtemperatur unter Inertgas 0,1 Mol 4-Phenyl-2-N,N-diethylamino-1,3-thiazol und 15 g wasserfreies $ZnCl_2$ portionsweise hinzugegeben. Hiernach wurde das Reaktionsgemisch während 2 Stunden bei 60 bis 70 °C gerührt und anschließend bei Raumtemperatur in 500 ml Wasser gegossen.

Die resultierende wäßrige Phase wurde während 30 Minuten unter Rühren zum Sieden erhitzt. Hiernach trennte man den entstanden Niederschlag durch Filtration aus der wäßrigen Phase ab, und versetzte das Filtrat mit 500 ml gesättigter Kochsalzlösung, wodurch sich der Naphtholactamfarbstoff I-48 als kristalliner Feststoff abschied.

Nach dem Abfiltrieren der wäßrigen Phase wurde der Naphtholactamfarbstoff I-48 mehrfach mit verdünnter Kochsalzlösung gewaschen und anschließend getrocknet.

Die Ausbeute am Farbstoff lag bei 25 %, bezogen auf das Naphtholactam der Formel IX. Die durch chemische Elementaranalyse ermittelte Elementzusammensetzung entsprach der theoretisch berechneten. Das Absorptionsmaximum des Farbstoffs lag bei $\lambda_{max}$ = 598 nm.

Beispiele 31 und 32

Die Herstellung der erfindungsgemäßen Naphtholactamfarbstoffe I-57 und I-60; allgemeine Versuchsvorschrift:

0,025 Mol N-Ethyl-5-N,N-dimethylaminosulfonyl-naphtholactam (= allgemeine Formel VIII mit $R^1$ = Ethyl, $R^4$ = N,N-Dimethylaminosulfonyl and t = 1) (Beispiel 31) oder 0,025 Mol N-Ethyl-5-brom-naphtholactam (= allgemeine Formel VIII mit $R^1$ = Ethyl, $R^4$ = Brom mit t = 1) (Beispiel 32) wurden zusammen

mit jeweils 2 g wasserfreiem $ZnCl_2$ in jeweils 10,5 g $POCl_3$ bei Raumtemperatur gelöst.

Die beiden resultierenden Lösungen wurden unter Rühren während 30 Minuten auf 110 °C erhitzt, wonach man sie auf 80 bis 90 °C abkühlen ließ. Hiernach wurde jeweils eine Lösung von 6,38 g 4-Phenyl-2-N,N-diethylamino-1,3-thiazol in 15 g 1,2-Dichlorethan zu den beiden Naphtholactam enthaltenden Lösungen innerhalb einer Stunde bei 80 bis 90 °C hinzugetropft.

Die beiden resultierenden Reaktionsgemische wurden anschließend während vier Stunden unter Rühren auf Rückflußtemperatur erhitzt, wonach man die beiden heißen Reaktionsgemische zu jeweils 100 ml 70 °C heißes Wasser hinzudosierte.

Die beiden resultierenden wäßrigen Phasen wurden auf Rückflußtemperatur erhitzt, wobei das 1,2-Dichlorethan abdestillierte. Hiernach wurden die beiden heißen wäßrigen Phasen mit jeweils 50 ml 50 %iger wäßriger Natriumacetat-Lösung versetzt und hiernach abgekühlt, wodurch sich die Naphtholactamfarbstoffe I-60 (Beispiel 31) und I-57 (Beispiel 32) als kristalline Feststoffe abschieden, welche leicht abfiltriert, mit Wasser gewaschen und getrocknet werden konnten.

Die Ausbeute an Farbstoff I-60 (Beispiel 31) lag bei 85 %, diejenige an Farbstoffe I-57 (Beispiel 32) bei 42 %, jeweils bezogen auf das betreffende Naphtholactam der allgemeinen Formel IX. Die durch chemische Elementaranalyse ermittelte Elementzusammensetzung der beiden Farbstoffe entsprach den jeweiligen theoretisch berechneten Zusammensetzungen. Das Absorptionsmaximum des Farbstoffs I-60 lag bei $\lambda_{max}$ = 626 nm, dasjenige von I-57 bei $\lambda_{max}$ = 622 nm.

## Ansprüche

1. Mehrschichtiges, elektrophotographisches Aufzeichnungsmaterial mit
(A) einem elektrisch leitenden Träger und mit
(B) einer oder mehreren Schicht(en) aus
($b_1$) einem oder mehreren Bindemittel(n),
($b_2$) einer oder mehreren Ladungsträger erzeugenden Verbindung(en) oder Sensibilisatoren,
($b_3$) einer oder mehreren Ladungsträger transportierenden Verbindung(en) oder Photoleitern und ggf.
($b_4$) Zusatzstoffen,
dadurch gekennzeichnet, daß man hierin als Ladungsträger erzeugende Verbindungen oder Sensibilisatoren ($b_2$) Naphtholactamfarbstoffe der allgemeinen Formel I verwendet,

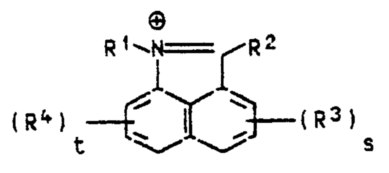

$(X)_n$ I

worin die Indices und die Variablen die folgende Bedeutung haben:

$R^1$ $C_1$- bis $C_{22}$-Alkyl, $C_5$- bis $C_7$-Cycloalkyl, ω-Aryl-$C_1$- bis ω-Aryl-$C_6$-Alkyl, Aryl und $C_3$- bis $C_{15}$-Alkylen;

$R^1$ mit Halogenatomen, mit Hydroxy-, Amino-, Thiolo-, Cyan- und/oder Oxogruppen, mit Alkyl-, Cycloalkyl-, Aryl- und/oder Arylalkyloxiresten, mit Alkyl-, Cycloalkyl-, Aryl- und/oder Arylalkylaminoresten, mit Alkan-, Cycloalkan-, Arylalkan- und/oder Aromatcarbonyloxiresten, mit Alkan-, Cycloalkan-, Aryl-und/oder Aromatcarbonylaminoresten, mit Alkyliden-, Cycloalkyliden- und/oder Arylalkylideniminoresten und/oder mit Carbon-, Phosphon- und/oder Sulfonsäuregruppen substituiertes $C_1$-bis $C_{22}$-Alkyl, $C_5$- bis $C_7$-Cycloalkyl, ω-Aryl-$C_1$- bis ω-Aryl-$C_6$-Alkyl, Aryl und $C_3$- bis $C_{15}$-Alkylen;

$R^1$ Rest der allgemeinen Formel II,

$R^5 \{O-(CH_2)_m\}_p$ II

worin $R^5$ ein Wasserstoffatom, $C_1$- bis $C_6$-Alkyl und $C_6$- bis $C_{10}$-Aryl bezeichnet und m gleich einer ganzen Zahl von 2 bis 4 und unabhängig hiervon p gleich einer ganzen Zahl von 1 bis 10 ist;

$R^2$ Rest der allgemeinen Formel III,

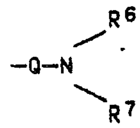

III

worin $R^6$ und $R^7$ voneinander verschieden oder gleich sind und Wasserstoffatome, Reste $R^1$ oder Alkan-1-yl-ω-carbonsäurealkylester bezeichnen und worin Q einen 1,4-Phenylen-, einen 2-Alkyl-1,4-phenylen- oder einen 1,4-Naphthylenrest bezeichnet;

$R^2$ Rest der allgemeinen Formel IV,

$-Q-R^8$ IV

worin $R^8$ einen über ein Stickstoffringatom mit Q verbundenen, substituierten oder unsubstituierten, monocyclischen oder anellierten Heterocyclus aus der Klasse der Azole, der Azoline, der Azolidine, der partiell oder vollständig hydrierten Azole und der partiell oder vollständig hydrierten Azepine bezeichnet und worin Q die bei der allgemeinen Formel III angegebene Bedeutung hat;

$R^2$ ein über ein Kohlenstoffringatom mit dem Naphtholactam-Grundgerüst verbundener, substituierter oder unsubstituierter, monocyclischer oder anellierter Heterocyclus aus der Klasse der Azole, der Azoline, der partiell hydrierten Azine und der Azine; und

$R^2$ Rest der allgemeinen Formel V,

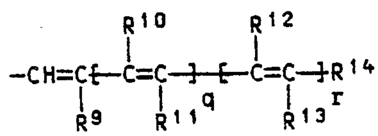

V

worin die Indices und die Variablen die folgende Bedeutung haben:

q 0 oder 1;

r unabhängig von q 0,1 oder 2;

$R^9$ und $R^{11}$ jeweils ein Wasserstoffatom oder für den Fall, daß q für 1 steht, zusammen eine unsubstituierte oder eine durch $C_1$- bis $C_4$-Alkyl substituierte $C_2$- bis $C_3$-Alkandiylkette oder eine oder zwei Carbonylgruppe(n);

$R^{10}$, $R^{12}$ und $R^{13}$ Wasserstoffatom, Halogenatom, Sauerstoffatom, Cyan, Nitro, Hydroxy, Rest $R^1$, $C_1$- bis $C_6$-Alkoxi, $C_5$- bis $C_7$-Cycloalkoxi, $C_6$- bis $C_{10}$-Aryloxi, ω-Phenyl-$C_1$- bis ω-Phenyl-$C_6$-alkyloxi, $C_1$- bis $C_6$-Alkoxi-, $C_5$- bis $C_7$-Cycloalkyloxi-, $C_6$- bis $C_{10}$-Aryloxi- und ω-Phenyl-$C_1$- bis ω-Phenyl-$C_6$-alkyloxicarbonyl, $C_1$- bis $C_6$-Alkylamino-, $C_5$-bis $C_7$-Cycloalkylamino-, $C_6$- bis $C_{10}$-Arylamino- und ω-Phenyl-$C_1$-bis ω-Phenyl-$C_6$-alkylaminocarbonyl und substituierter oder unsubstituierter monocyclischer oder anellierter Heterocyclus aus der Klasse der Azole, der Azoline, der Azine und der partiell hydrierten Azine, wobei $R^{10}$, $R^{12}$ und $R^{13}$ voneinander verschieden oder gleich sind;

$R^{14}$ Rest $R^2$ der allgemeinen Formel III;

$R^{14}$ Rest $R^2$ der allgemeinen Formel IV;

$R^{14}$ ein über ein Kohlenstoffringatom mit dem Rest der allgemeinen Formel V verbundener, substituierter oder unsubstituierter, monocyclischer oder anellierter Heterocyclus aus der Klasse der Azole, der Thiole, der Azoline, der Azolidine, der Azine der partiell oder vollständig hydrierten Azine und der Thiine; und

$R^{14}$ Rest der allgemeinen Formel VI,

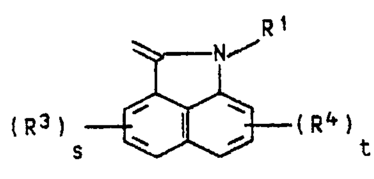

VI

worin $R^1$ die vorstehend angegebene Bedeutung hat und worin $R^3$, $R^4$, s und t die nachstehend angegebene Bedeutung haben;

$R^2$ Rest der allgemeinen Formel VII,

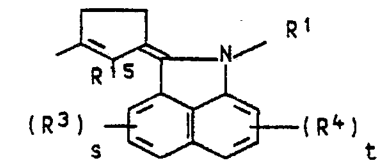

VII,

worin $R^1$ die vorstehend angegebene Bedeutung hat, $R^3$, $R^4$, s und t die nachstehend angegebene Bedeutung haben und worin $R^{15}$ den Rest einer CH-aciden Verbindung bezeichnet;

s 1, 2 oder 3;

t unabhängig von s 1, 2 oder 3;

$R^3$ und $R^4$ Rest $R^{10}$, $R^{12}$ oder $R^{13}$, Rest $^1$, Carbon, Sulfon- und Phosphonsäuregruppe, $C_1$-bis $C_6$-Alkyl-, $C_5$- bis $C_7$-Cycloalkyl-, $C_6$- bis $C_{10}$- Aryl- und ω-Phenyl-$C_1$- bis ω-Phenyl-$C_6$-alkylthio, -oxisulfonyl, -sulfonyl und -oxicarbonylaminyl, N,N-Dialkyl-, N,N-Diaryl-, N-Alkyl-N-aryl-, N,N-Di-(ω-arylalkyl)-, N-Alkyl-N-(ω-arylalkyl)-, N-Aryl-N-(ω-arylalkyl)-, N,N-Dicycloalkyl-, N-Cycloalkyl-N-alkyl-, N-Cycloalkyl-N-aryl- und N-Cycloalkyl-N-(ω-arylalkyl)amino, -aminosulfonyl und -aminocarbonyl sowie für die Fälle, daß

s = 2 oder 3,

t = 2 oder 3 oder

s und t = 1, 2 oder 3

ein Kohlenstoff-, Stickstoff-, Sauerstoff- und Schwefelatom, welches Bestandteil des Gerüsts von einem oder von mehreren an die Naphth-1,8-ylen-Gruppe anellierten Ringen ist.

X wobei $R^3$ und $R^4$ voneinander verschieden oder gleich sind;

Anion;

und

n 0 oder 1/3, 1/2, 2/3, 1, 2 oder 3.

2. Mehrschichtiges, elektrophotographisches Aufzeichnungsmaterial nach Anspruch 1, dadurch gekennzeichnet, daß die Schicht (B) als Doppelschicht ausgelegt ist, welche aus einer Naphtholactamfarbstoffe I enthaltenden Sensibilisatorschicht ($b_2$) und einer Schicht aus Bindemitteln ($b_1$), Photoleitern ($b_3$) und ggf. Zusatzstoffen ($b_4$) besteht.

3. Mehrschichtiges, elektrophotographisches Aufzeichnungsmaterial nach Anspruch 2, dadurch gekennzeichnet, daß die Schicht (B) als Doppelschicht ausgelegt ist, welche eine Sensibilisatorschicht ($b_2$) aus Naphtholactamfarbstoffen I enthält.

4. Mehrschichtiges, elektrophotographisches Aufzeichnungsmaterial nach Anspruch 1, dadurch gekennzeichnet, daß sich hierin zwischen dem Träger (A) und der Schicht (B) eine weitere Sensibilisatorschicht aus einem an sich bekannten Pigment befindet.

5. Mehrschichtiges, elektrophotographisches Aufzeichnungsmaterial nach Anspruch 1 oder 4, dadurch gekennzeichnet, daß sich hierin auf dem Träger (A) eine weitere photoleitende Schicht aus einem an sich bekannten Photoleiter befindet.

6. Mehrschichtiges, elektrophotographisches Aufzeichnungsmaterial gemäß einem der Ansprüche 1 bis 5, zur Herstellung elektrophotographischer Druckplatten, dadurch gekennzeichnet, daß es einen für Druckplatten geeigneten Träger (A) einer Dicke von 80 μm bis 0,6 mm und mindestens eine Schicht (B) enthält.

7. Mehrschichtiges, elektrophotographisches Aufzeichnungsmaterial nach Anspruch 6, dadurch gekennzeichnet, daß die Bindemittel ($b_1$) der Schicht(en) (B) in wäßrig-alkalischen oder wäßrig-alkoholischen Entwicklerlösungsmitteln löslich oder quellbar sind.

8. Mehrschichtiges elektrophotographisches Aufzeichnungsmaterial nach Anspruch 6 oder 7, dadurch gekennzeichnet, daß das Bindemittel ($b_1$) ein Copolymerisat aus Styrol, Maleinsäureanhydrid und Acrylsäure und/oder Methacrylsäure ist, welches bezogen auf seine Gesamtmenge,

5 bis 50 Gew.% Maleinsäureanhydrid und

5 bis 35 Gew.% Acrylsäure und/oder Methacrylsäure

einpolymerisiert enthält.

9. Verfahren zur Herstellung elektrophotographischer Offsetdruckplatten durch

1. bildmäßiges Belichten eines elektrisch negativ oder elektrisch positiv aufgeladenen, mehrschichtigen, elektrophotographischen Aufzeichnungsmaterials mit aktinischem Licht, wodurch ein latentes elektrostatisches Ladungsbild erzeugt wird,
2. Entwickeln des latenten elektrostatischen Ladungsbildes mittels fester oder flüssiger Toner,
3. Fixieren des betonerten Bildes durch Erhitzen und
4. Wegwaschen der unbetonerten Nichtbildbereiche des elektrophotographischen Aufzeichnungsmaterials mit Entwicklerlösungsmitteln, wodurch die hydrophile Oberfläche des Trägers (A) freigelegt wird,

dadurch gekennzeichnet, daß man hierzu ein mehrschichtiges, elektrophotographisches Aufzeichnungsmaterial nach einem der Ansprüche 6, 7 oder 8 verwendet und daß man hierbei die bildmäßige Belichtung (Verfahrensschritt 1) mit rotem oder infrarotem Licht durchführt.

10. Verfahren zur Herstellung elektrophotographischer Offsetdruckplatten nach Anspruch 9, dadurch gekennzeichnet, daß man hierbei für die bildmäßige Belichtung (Verfahrensschritt 1) einen Halbleiterlaser als Lichtquelle verwendet.

11. Verfahren zur Herstellung elektrophotographischer Photoresists durch

1. bildmäßiges Belichten eines elektrisch negativ oder elektrisch positiv aufgeladenen, mehrschichtigen, elektrophotographischen Aufzeichnungsmaterials mit aktinischem Licht, wodurch ein latentes elektrostatisches Ladungsbild erzeugt wird,
2. Entwickeln des latenten elektrostatischen Ladungsbildes mittels fester oder flüssiger Toner,
3. Fixieren des betonerten Bildes durch Erhitzen und
4. Wegwaschen der unbetonerten Nichtbildbereiche des elektrophotographischen Aufzeichnungsmaterials mit Entwicklerlösungsmitteln, wodurch die zu ätzende und/oder zu galvanisierende Oberfläche des Trägers (A) freigelegt wird,

dadurch gekennzeichnet, daß man hierzu ein mehrschichtiges elektrophotographisches Aufzeichnungsmaterial nach Anspruch 1 verwendet und daß man hierbei die bildmäßige Belichtung (Verfahrensschritt 1) mit rotem oder infrarotem Licht durchführt.

12. Verfahren zur Herstellung elektrophotographischer Photoresists nach Anspruch 11, dadurch gekennzeichnet, daß man hierbei für die bildmäßige Belichtung (Verfahrensschritt 1) einen Halbleiterlaser als Lichtquelle verwendet.

13. Reprographisches Verfahren zur Herstellung von Photokopien durch

1. bildmäßiges Belichten eines elektrisch negativ oder elektrisch positiv aufgeladenen, mehrschichtigen, elektrophotographischen Aufzeichnungsmaterials mit aktinischem Licht, wodurch ein latentes elektrostatisches Ladungsbild erzeugt wird,
2. Entwickeln des latenten elektrostatischen Ladungsbildes mittels fester oder flüssiger Toner und
3. Übertragen des Tonerbildes auf eine andere Oberfläche,

dadurch gekennzeichnet, daß man hierzu ein mehrschichtiges elektrophotographisches Aufzeichnungsmaterial nach einem der Ansprüche 1 bis 6 verwendet und daß man hierbei die bildmäßige Belichtung (Verfahrensschritt 1) mit rotem oder infrarotem Licht durchführt.

14. Reprographisches Verfahren nach Anspruch 13, dadurch gekennzeichnet, daß man hierbei für die bildmäßige Belichtung (Verfahrensschritt 1) einen Halbleiterlaser als Lichtquelle verwendet.

15. Naphtholactamfarbstoffe der allgemeinen Formel I, worin die Variablen $R^1$, $R^3$, $R^4$ und X sowie die Indices t, s und n die in Anspruch 1 angegebene Bedeutung haben und worin der Rest $R^2$ ein über ein Kohlenstoffringatom mit dem Naphtholactam-Grundgerüst verbundener, substituierter monocyclischer 1,3-Thiazolylrest ist.

16. Naphtholactamfarbstoffe nach Anspurch 15, dadurch gekennzeichnet, daß der substituierte 1,3-Thiazolylrest ein 4-Aryl-2-N,N-dialkylamino-, ein 4-Aryl-2-N,N-dicycloalkylamino-, ein 4-Aryl-2-N-alkyl-N-cycloalkyl-amino-, ein 4-Aryl-2-N,N-diarylamino-, ein 4-Aryl-2-N-alkyl-N-aryl-amino-, ein 4-Aryl-2-N-cycloalkyl-N-aryl-amino-, ein 4-Aryl-2-N,N-di(ω-arylalkyl)-amino, ein 4-Aryl-2-N-alkyl-N-(ω-arylalkyl)-amino-, ein 4-Aryl-2-N-(ω-arylalkyl)-N-aryl-amino-, ein 4-Aryl-2-N-(ω-arylalkyl)-N-cycloalkyl-amino-, ein 4-Aryl-2-(azolidin-1′-yl)-, ein 4-Aryl-2-(azolin-1′-yl)-, ein 4-Aryl-2-(azol-1′-yl)- oder ein 4-Aryl-2-(perhydroazin-1′-yl)-1,3-thiazol-5-yl-Rest ist.

17. Naphtholactamfarbstoffe nach Anspruch 16, dadurch gekennzeichnet, daß es sich bei dem Arylrest um Phenyl handelt.

18. Naphtholactamfarbstoffe nach Anspruch 16, dadurch gekennzeichnet, daß es sich bei dem N,N-Dialkylamino-Rest um einen N,N-Diethylamino-Rest handelt.

19. Naphtholactamfarbstoffe nach einem der Ansprüche 15 bis 18, dadurch gekennzeichnet, daß X für Tetrachlorzinkat und n für 1/2 steht.

20. Verwendung der Naphtholactamfarbstoffe der allgemeine Formel I gemäß einem der Ansprüche 15 bis 19 für die Herstellung von mehrschichtigen elektrophotographischen Aufzeichnungsmaterialien und von laseroptischen Aufzeichnungsmaterialien.